# EUROPEAN PATENT SPECIFICATION

(11) **EP 3 029 905 B1**
(45) Date of publication and mention of the grant of the patent: **09.08.2017**
(21) Application number: 13893127.4
(22) Date of filing: 03.09.2013
(51) Int. Cl.: H04L 29/06, H04L 29/08

(54) **LINK DISCOVERY METHOD AND SDN CONTROLLER**
VERBINDUNGSERKENNUNGSVERFAHREN UND SDN-STEUERUNG
PROCÉDÉ DE DÉCOUVERTE DE LIAISON ET ORGANE DE COMMANDE DE SDN

(43) Date of publication of application: 08.06.2016
(73) Proprietor: Huawei Technologies Co., Ltd., Longgang District Shenzhen, Guangdong 518129 (CN)
(72) Inventor: LI, Gang, Shenzhen Guangdong 518129 (CN)
(74) Representative: Körber, Martin Hans
(86) International application number: PCT/CN2013/082865
(87) International publication number: WO 2015/032026

(56) References cited:
- CN-A- 1 747 432
- CN-A- 102 130 793
- CN-A- 103 051 565
- CN-A- 103 236 941
- XIE HUAWEI & USTC T TSOU HUAWEI (USA) D LOPEZ TELEFONICA I+D H YIN HUAWEI (USA) H: "Use Cases for ALTO with Software Defined Networks; draft-xie-alto-sdn-extension-use-cases-01. txt", USE CASES FOR ALTO WITH SOFTWARE DEFINED NETWORKS; DRAFT-XIE-ALTO-SDN-EXTENSION-USE-CASES-01. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 9 January 2013 (2013-01-09), pages 1-29, XP015089409, [retrieved on 2013-01-09]
- Open Networking Foundation: "OpenFlow Switch Specification", , 25 April 2013 (2013-04-25), XP055277123, Retrieved from the Internet: URL:https://www.opennetworking.org/images/ stories/downloads/sdn-resources/onf-specif ications/openflow/openflow-spec-v1.3.2.pdf [retrieved on 2016-06-01]

## Description

### TECHNICAL FIELD

The present invention relates to the field of communications technologies, and in particular, to a link discovery method, an SDN controller and a device.

### BACKGROUND

Software defined networking (SDN) is an innovative network architecture, which separates a control plane of a network from an actual structure of a physical topology and provides a programmable interface for the control plane, where hardware devices in the physical topology do not control routing of packets anymore by using respective software, but forward the packets according to forwarding rules received from the control plane. In this way, in a network of a certain range (or referred to as an SDN domain), a centralized and unified control logic unit performs management on the network of the range, so as to resolve a management problem of a large quantity of disperse forwarding devices independently running in the network, so that design, deployment, operation and maintenance, and management of the network are completed by a control point, and differentiation of an underlying network is eliminated. The centralized and unified control logic unit may be an SDN controller, namely, the SDN controller provides a control plane to perform unified control and management on devices in the SDN domain administrated by the SDN controller. The SDN controller may control and manage, by using an Openflow protocol, the devices in the SDN domain administrated by the SDN controller.

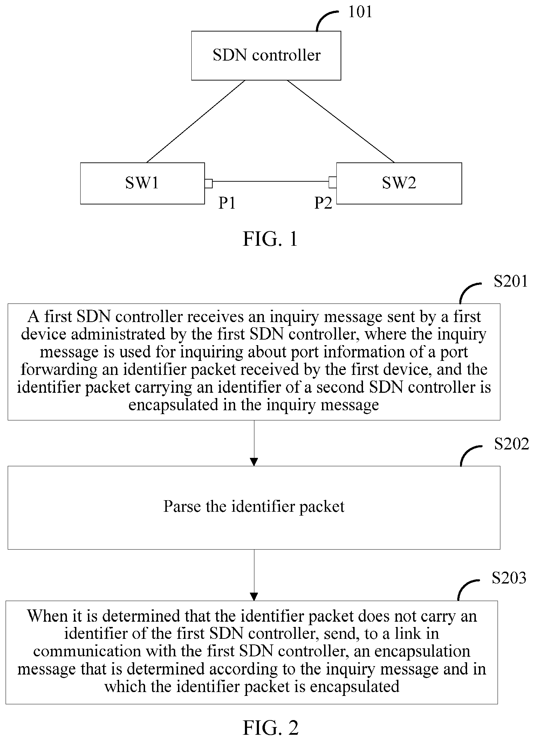

Further, automatic link discovery, by the SDN controller, in the SDN domain administrated by the SDN controller is a premise on which the SDN controller implements SDN network link management, automatic network topology discovery and the like. A process of automatic link discovery, by the SDN controller, in the SDN domain administrated by the SDN controller is mainly: a process of automatically discovering a connection relationship between ports based on a port library (that is, ports of devices included in the SDN domain) that is in the SDN domain administrated by the SDN controller. In the prior art, a method for a provided SDN controller to automatically discover a link in an SDN domain administrated by the SDN controller mainly includes the following two types:
First type: as shown in FIG. 1, an SDN domain administrated by an SDN controller 101 includes two devices SW1 and SW2. The SDN controller 101 communicates with the devices in the SDN domain administrated by the SDN controller 101 by using a Packet-out message and a Packet-in message in an Openflow protocol, and a Link Layer Discovery Protocol (LLDP) protocol, so as to complete automatic link discovery. A method for the SDN controller 101 to automatically discover a link in the SDN domain mainly includes the following steps:
   Step 1: The SDN controller 101 discovers a port library in the SDN domain, where the port library includes a port P1 of SW1 and a port P2 of SW2.

Step 2: The SDN controller 101 separately sends a Packet-out message to each device whose port is in the port library, where the Packet-out message is used for instructing the device to send a packet carried in the Packet-out message by using an egress port designated by the SDN controller 101. The Packet-out message carries an LLDP packet, and the LLDP packet is used for indicating information about the SDN controller 101, such as a main capability, a management address, a device identifier, and an interface identifier.

Step 3: After receiving a Packet-out message, assuming that which instructs SW1 to forward an LLDP packet carried in the Packet-out message by using P1, SW1 removes a message header of the Packet-out message, and forwards the LLDP packet from P 1.

Step 4: Assuming that a physical link exists between P1 and the port P2 of SW2, SW1 forwards the LLDP packet from P1 to SW2 by using the port P2. After SW2 receives the LLDP packet, because at an automatic link discovery stage of the controller, no flow table is generated, SW2 does not know where the LLDP packet should be forwarded. Therefore, SW2 encapsulates the LLDP packet in a Packet-in message, sends the Packet-in message to the SDN controller 101 administrating SW2, and adds, to the Packet-in message, port information of an ingress port, P2, which receives the LLDP packet.

Step 5: After receiving the Packet-in message, the SDN controller 101 performs parsing to find that the LLDP packet carried in the Packet-in message sent by itself, and to obtain the Packet-out message used for carrying the LLDP packet when the SDN controller 101 sends the LLDP packet, thereby discovering the link between P1 and P2 by using port information of the egress port P1 carried in the Packet-out message and the port information of the ingress port P2 carried in the corresponding Packet-out message.

Second type: as shown in FIG. 1, the SDN controller 101 communicates with the devices in the SDN domain administrated by the SDN controller 101 by using an LLDP protocol, so as to complete automatic link discovery. A method for the SDN controller 101 to automatically discover a link in the SDN domain mainly includes the following steps:
Step 1: SW1 and SW2 separately send, by using multicast addresses, LLDP packets to other devices in the SDN domain administrated by the SDN controller 101 and the SDN controller 101, where the LLDP packet is used for indicating information about a device sending the LLDP packet, such as a main capability, a management address, a device identifier, and an interface identifier.

Step 2: After separately receiving LLDP packets sent by other devices, SW1 and SW2 forward the received LLDP packets to other devices in the SDN domain administrated by the SDN controller 101 and the SDN controller 101. The SDN controller 101 discovers, by using a received LLDP packet sent by each device, a link in the SDN domain administrated by the SDN controller 101.

Further, in the foregoing two methods provided in the prior art for an SDN controller to automatically discover a link in an SDN domain administrated by the SDN controller, the SDN controller can only automatically discover a link in the SDN domain administrated by the SDN controller, but a cross-domain link between two SDN domains separately administrated by two SDN controllers cannot be automatically discovered.

Further, SDN controllers in the prior art, such as, a router device controller administrating a routing device and an optical network controller administrating an optical network device may administrate network devices located at different network layers. Because the routing device and the optical network device are network devices located at different network layers, and moreover because the routing device and the optical network device are controlled by different SDN controllers, but a link exists between a routing device and a optical network device, a cross-domain link between SDN domains located at different layers cannot be automatically discovered either in the prior art.

XIE HUAWEI & USTC T TSOU HUAWEI (USA) D LOPEZ TELEFONICA I+D H YIN HUAWEI (USA) H, "Use Cases for ALTO with Software Defined Networks; draft-xie-alto-sdn-extension-use-cases-01.txt", INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, (20130109), PAGE 1 - 29, section 2.3 discloses use cases for application layer traffic optimization with SDN.

### SUMMARY

The invention is defined by claims 1, 6, 10 and 14.

Embodiments of the present invention provide a link discovery method, an SDN controller and a device, which are used for resolving a problem in the prior art that a cross-SDN-domain link cannot be discovered.

A first aspect provides a link discovery method, including:
receiving, by a first software defined networking (SDN) controller, an inquiry message sent by a first device administrated by the first SDN controller, where the inquiry message is used for inquiring about port information of a port forwarding an identifier packet received by the first device, and the identifier packet carrying an identifier of a second SDN controller is encapsulated in the inquiry message;
parsing, by the first SDN controller, the identifier packet; and
when it is determined that the identifier packet does not carry an identifier of the first SDN controller, sending, by the first SDN controller, to a link in communication with the first SDN controller, an encapsulation message that is determined according to the inquiry message and in which the identifier packet is encapsulated, where
the encapsulation message is used for: when the second SDN controller receives the encapsulation message, determining, by the second SDN controller, according to the identifier packet encapsulated in the encapsulation message that a cross-SDN-domain link exists between a second device sending the identifier packet to the first device and the first device.

With reference to the first aspect, in a first possible implementation manner, when the second SDN controller is a parent SDN controller of the first SDN controller, the sending, to a link in communication with the first SDN controller, an encapsulation message that is determined according to the inquiry message and in which the identifier packet is encapsulated specifically includes: forwarding the inquiry message to the parent SDN controller of the first SDN controller.

With reference to the first aspect, in a second possible implementation manner, the identifier packet carries a domain identifier of an SDN domain administrated by the second SDN controller; the sending, to a link in communication with the first SDN controller, an encapsulation message that is determined according to the inquiry message and in which the identifier packet is encapsulated specifically includes: forwarding the inquiry message to the second SDN controller according to the domain identifier of the SDN domain administrated by the second SDN controller that is carried in the identifier packet and obtained by parsing.

With reference to the first possible implementation manner of the first aspect, or with reference to the second possible implementation manner of the first aspect, in a third possible implementation manner, the identifier packet encapsulated in the inquiry message is received by the first device by using an ingress port, and the inquiry message further carries port information of the ingress port.

With reference to the first possible implementation manner of the first aspect, or with reference to the second possible implementation manner of the first aspect, in a fourth possible implementation manner, the identifier packet encapsulated in the inquiry message is the identifier packet that is received by the first device by using an ingress port and carries link attribute information of a link corresponding to an egress port of the second device; and the identifier packet encapsulated in the inquiry message sent by the first device to the first SDN controller further carries link attribute information of a link corresponding to the ingress port.

A second aspect provides a link discovery method, including:
sending, by a parent software defined networking (SDN) controller, an indication message in which an identifier packet carrying an identifier of the parent SDN controller is encapsulated to a first SDN sub-controller, where the indication message is used for instructing the first SDN sub-controller to forward the identifier packet by using a designated device administrated by the first SDN sub-controller;
receiving, by the parent SDN controller, an inquiry message forwarded by a second SDN sub-controller, where the inquiry message is an inquiry message that is used for inquiring of the second SDN sub-controller about port information of a port forwarding the identifier packet and in which the identifier packet is encapsulated by a device administrated by the second SDN sub-controller after the device receives the identifier packet sent by the designated device;
parsing, by the parent SDN controller, the identifier packet encapsulated in the inquiry message; and
when it is determined that the identifier packet carries an identifier of the parent SDN controller, determining, by the parent SDN controller, according to the identifier packet that a cross-SDN-domain link exists between the designated device and the device that is administrated by the second SDN sub-controller. With reference to the second aspect, in a first possible implementation manner, the indication message is specifically used for instructing the designated device to send the identifier packet by using a designated egress port, and the identifier packet has a correspondence with the indication message; the inquiry message is specifically an inquiry message that carries port information of an ingress port, in which the identifier packet is encapsulated by the device administrated by the second SDN sub-controller after the device administrated by the second SDN sub-controller receives, by using the ingress port, the identifier packet sent by the designated device by using the egress port, and that is used for inquiring of the second SDN sub-controller about the port information of the port forwarding the identifier packet; and the determining according to the identifier packet that a cross-SDN-domain link exists between the designated device and the device that is administrated by the second SDN sub-controller specifically includes: determining an indication message that has a correspondence with the identifier packet according to the identifier packet; and determining that a cross-SDN-domain link exists between the egress port designated in the indication message and the ingress port indicated in the inquiry message.

With reference to the second aspect, in a second possible implementation manner, the indication message is specifically used for instructing the designated device to send the identifier packet by using a designated egress port; and the identifier packet sent by the designated device by using the egress port carries link attribute information of a link corresponding to the egress port; the identifier packet encapsulated in the inquiry message sent by the device administrated by the second SDN sub-controller to the second SDN sub-controller further carries link attribute information of a link corresponding to the ingress port; and the determining according to the identifier packet that a cross-SDN-domain link exists between the designated device and the device that is administrated by the second SDN sub-controller specifically includes: determining according to the link attribute information of the link corresponding to the egress port and the link attribute information of the link corresponding to the ingress port that are carried in the identifier packet that a cross-SDN-domain link exists between the egress port and the ingress port.

With reference to the first possible implementation manner of the second aspect, or with reference to the second possible implementation manner of the second aspect, in a third possible implementation manner, before the sending, by a parent SDN controller, an indication message to a first SDN sub-controller, the method further includes: receiving, by the parent SDN controller, port information reported by the first SDN sub-controller, where a port represented by the port information is a port that is determined from ports of devices administrated by the first SDN sub-controller and does not form any link with any one of the ports; and determining that a reported port is the designated egress port according to the port information received, and determining that a device to which the reported port belongs is the designated device.

A third aspect provides an SDN controller, including:
a receiving module, configured to receive an inquiry message sent by a first device administrated by the SDN controller, where the inquiry message is used for inquiring about port information of a port forwarding an identifier packet received by the first device, and the identifier packet carrying an identifier of another SDN controller is encapsulated in the inquiry message;
a parsing module, configured to parse the identifier packet that is received by the receiving module and encapsulated in the inquiry message; and
a sending module, configured to: when it is determined according to a parsing result of the parsing module that the identifier packet does not carry an identifier of the SDN controller, send, to a link in communication with the SDN controller, an encapsulation message that is determined according to the inquiry message and in which the identifier packet is encapsulated, where the encapsulation message is used for: when the another SDN controller receives the encapsulation message, determining according to the identifier packet encapsulated in the encapsulation message that a cross-SDN-domain link exists between a second device sending the identifier packet to the first device and the first device.

With reference to the third aspect, in a first possible implementation manner, when the another SDN controller is a parent SDN controller of the SDN controller, the sending module is specifically configured to forward the inquiry message to the parent SDN controller of the SDN controller.

With reference to the third aspect, in a second possible implementation manner, the sending module is specifically configured to: when the identifier packet carries a domain identifier of an SDN domain administrated by the another SDN controller, forward the inquiry message to the another SDN controller according to the domain identifier of the SDN domain administrated by the another SDN controller that is carried in the identifier packet and obtained by parsing.

With reference to the third aspect, in a third possible implementation manner, the sending module is specifically configured to send an indication message in which the encapsulation message is encapsulated to the first device, where the indication message is used for instructing the device to forward the encapsulation message.

A fourth aspect provides a parent SDN controller, including:
a sending module, configured to send an indication message in which an identifier packet carrying an identifier of the parent SDN controller is encapsulated to a first software defined networking (SDN) sub-controller, where the indication message is used for instructing the first SDN sub-controller to forward the identifier packet by using a designated device administrated by the first SDN sub-controller;
a receiving module, configured to receive an inquiry message forwarded by a second SDN sub-controller, where the inquiry message is an inquiry message that is used for inquiring of the second SDN sub-controller about port information of a port forwarding the identifier packet and in which the identifier packet is encapsulated by a device administrated by the second SDN sub-controller after the device receives the identifier packet sent by the designated device;
a parsing module, configured to parse the identifier packet that is received by the receiving module and encapsulated in the inquiry message; and
a determining module, configured to: when it is determined according to a parsing result of the parsing module that the identifier packet carries an identifier of the parent SDN controller, determine according to the identifier packet that a cross-SDN-domain link exists between the designated device receiving the indication message sent by the sending module and the device that is administrated by the second SDN sub-controller.

With reference to the fourth aspect, in a first possible implementation manner, the indication message sent by the sending module is specifically used for instructing the designated device to send the identifier packet by using a designated egress port, and the identifier packet has a correspondence with the indication message; the inquiry message received by the receiving module is specifically an inquiry message that carries port information of an ingress port, in which the identifier packet is encapsulated by the device administrated by the second SDN sub-controller after the device administrated by the second SDN sub-controller receives, by using the ingress port, the identifier packet sent by the designated device by using the egress port, and that is used for inquiring of the second SDN sub-controller about the port information of the port forwarding the identifier packet; and the determining module is specifically configured to determine an indication message that has a correspondence with the identifier packet according to the identifier packet; and determine that a cross-SDN-domain link exists between the egress port designated in the indication message and the ingress port indicated in the inquiry message.

Beneficial effects of the embodiments of the present invention include:
According to a link discovery method, an SDN controller and a device provided in the embodiments of the present invention, a parent SDN controller sends an indication message in which an identifier packet carrying an identifier of the parent SDN controller is encapsulated to a first SDN sub-controller, where the indication message is used for instructing the first SDN sub-controller to forward the identifier packet by using a designated device administrated by the first SDN sub-controller; after receiving the identifier packet sent by the designated device, a device administrated by a second SDN sub-controller encapsulates the identifier packet in an inquiry message used for inquiring of the second SDN sub-controller about port information of a port forwarding the identifier packet, and sends the inquiry message to the second SDN sub-controller, and when performing parsing to find that the identifier packet does not carry an identifier of the second SDN sub-controller, the second SDN sub-controller forwards the inquiry message to the parent SDN controller; the parent SDN controller parses the identifier packet encapsulated in the inquiry message; and when it is determined that the identifier packet carries an identifier of the parent SDN controller, it is determined according to the identifier packet that a cross-SDN-domain link exists between the designated device and the device that is administrated by the second SDN sub-controller. The parent SDN controller detects a link between SDN sub-controllers administrated by the parent SDN controller, to discover a cross-SDN-domain link between SDN domains in which multiple SDN sub-controllers administrated by the parent SDN controller are located, so as to resolve a problem in the prior art that a cross-SDN-domain link cannot be discovered.

According to a link discovery method, an SDN controller and a device provided in the embodiments of the present invention, a first SDN controller sends an indication message in which an identifier packet carrying an identifier of the first SDN controller is encapsulated to a designated device administrated by the first SDN controller, where the indication message is used for instructing the designated device to forward the identifier packet; a second SDN controller receives a first inquiry message that is sent by a device administrated by the second SDN controller and is used for inquiring about port information of a port forwarding the identifier packet received by the device, parses the identifier packet, and when it is determined that the identifier packet does not carry an identifier of the second SDN controller, sends, to a link in communication with the second SDN controller, an encapsulation message that is determined according to the first inquiry message and in which the identifier packet is encapsulated; and after receiving the encapsulation message, the first SDN controller parses the identifier packet encapsulated in the encapsulation message, and when it is determined that the identifier packet carries an identifier of the first SDN controller, it is determined according to the identifier packet that a cross-SDN-domain link exists between the designated device and the device that is administrated by the second SDN controller. An SDN controller initiates detection on another SDN controller, thereby discovering a cross-SDN-domain link between the SDN controllers, so as to resolve a problem in the prior art that a cross-SDN-domain link cannot be discovered.

### BRIEF DESCRIPTION OF DRAWINGS

FIG. 1 is a schematic diagram of an SDN controller and a connection relationship between devices administrated by the SDN controller according to the background technology of the present invention;
FIG. 2 is a flowchart of a link discovery method applied to an SDN controller side according to an embodiment of the present invention;
FIG. 3 is a flowchart of a link discovery method applied to a parent SDN controller side according to an embodiment of the present invention;
FIG. 4 is a flowchart of a link discovery method applied to a first SDN controller side according to an embodiment of the present invention;
FIG. 5 is a flowchart of a link discovery method applied to a device side according to an embodiment of the present invention;
FIG. 6 is a flowchart of a link discovery method applied to a parent SDN controller side according to an embodiment of the present invention;
FIG. 7 is a flowchart of a link discovery method applied to a second SDN sub-controller side according to an embodiment of the present invention;
FIG. 8 is a flowchart of a link discovery method applied to a parent SDN controller side according to an embodiment of the present invention;
FIG. 9 is a flowchart of a link discovery method applied to a second SDN sub-controller side according to an embodiment of the present invention;
FIG. 10 is a flowchart of a link discovery method applied to a parent SDN controller, a first SDN sub-controller, and a second SDN sub-controller side according to an embodiment of the present invention;
FIG. 11 is a schematic diagram of a parent SDN controller and a connection relationship between devices administrated by the parent SDN controller according to an embodiment of the present invention;
FIG. 12 is a flowchart of Example 1 of a link discovery method according to an embodiment of the present invention;
FIG. 13 is a schematic diagram of a parent SDN controller and a connection relationship between devices administrated by the parent SDN controller according to an embodiment of the present invention;
FIG. 14 is a flowchart of Example 2 of a link discovery method according to an embodiment of the present invention;
FIG. 15 is a flowchart of a link discovery method applied to a first SDN controller side according to an embodiment of the present invention;
FIG. 16 is a flowchart of a link discovery method applied to a second SDN controller side according to an embodiment of the present invention;
FIG. 17 is a flowchart of a link discovery method applied to a second SDN controller side according to an embodiment of the present invention;
FIG. 18 is a flowchart of a link discovery method applied to a first SDN controller side according to an embodiment of the present invention;
FIG. 19 is a flowchart of a link discovery method applied to a second SDN controller side according to an embodiment of the present invention;
FIG. 20 is a flowchart of a link discovery method applied to a first SDN controller side according to an embodiment of the present invention;
FIG. 21 is a flowchart of a link discovery method applied to a second SDN controller side according to an embodiment of the present invention;
FIG. 22 is a schematic diagram of an SDN controller and a connection relationship between devices administrated by the SDN controller according to an embodiment of the present invention;
FIG. 23 is a flowchart of Example 3 of a link discovery method according to an embodiment of the present invention;
FIG. 24 is a flowchart of Example 4 of a link discovery method according to an embodiment of the present invention;
FIG. 25 is a flowchart of a link discovery method applied to a first SDN controller side according to an embodiment of the present invention;
FIG. 26 is a flowchart of a link discovery method applied to a second SDN controller side according to an embodiment of the present invention;
FIG. 27 is a flowchart of a link discovery method applied to a first SDN controller side according to an embodiment of the present invention;
FIG. 28 is a flowchart of a link discovery method applied to a second SDN controller side according to an embodiment of the present invention;
FIG. 29 is a flowchart of a link discovery method applied to a first SDN controller side according to an embodiment of the present invention;
FIG. 30 is a flowchart of a link discovery method applied to a second SDN controller side according to an embodiment of the present invention;
FIG. 31 is a schematic diagram of an SDN controller and a connection relationship between devices administrated by the SDN controller according to an embodiment of the present invention;
FIG. 32 is a flowchart of Example 5 of a link discovery method according to an embodiment of the present invention;
FIG. 33 is a flowchart of Example 6 of a link discovery method according to an embodiment of the present invention;
FIG. 34 is a flowchart of a link discovery method applied to a device side according to an embodiment of the present invention;
FIG. 35 is a schematic structural diagram of an SDN controller according to an embodiment of the present invention;
FIG. 36 is a schematic structural diagram of a parent SDN controller according to an embodiment of the present invention;
FIG. 37 is a schematic structural diagram of an SDN controller according to an embodiment of the present invention;
FIG. 38 is a schematic structural diagram of a device according to an embodiment of the present invention;
FIG. 39 is a schematic structural diagram of an SDN controller according to an embodiment of the present invention;
FIG. 40 is a schematic structural diagram of a parent SDN controller according to an embodiment of the present invention;
FIG. 41 is a schematic structural diagram of an SDN controller according to an embodiment of the present invention; and
FIG. 42 is a schematic structural diagram of a device according to an embodiment of the present invention.

### DESCRIPTION OF EMBODIMENTS

Embodiments of the present invention provide a link discovery method, an SDN controller and a device. Exemplary embodiments of the present invention are described below with reference to accompanying drawings of this specification. It should be understood that the exemplary embodiments described herein are only used for describing and explaining the present invention but not intended to limit the present invention. Moreover, in a case that no conflict occurs, the embodiments in the application and the features in the embodiments may be mutually combined.

A link discovery method provided in an embodiment of the present invention is applied to an SDN controller side used as a non-initiator discovering a cross-SDN-domain link. As shown in FIG. 2, the method specifically includes the following steps:
S201: A first SDN controller receives an inquiry message sent by a first device administrated by the first SDN controller, where the inquiry message is used for inquiring about port information of a port forwarding an identifier packet received by the first device, and the identifier packet carrying an identifier of a second SDN controller is encapsulated in the inquiry message.

S202: Parse the identifier packet in S201.

S203: When it is determined that the identifier packet does not carry an identifier of the first SDN controller, send, to a link in communication with the first SDN controller, an encapsulation message that is determined according to the inquiry message and in which the identifier packet is encapsulated.

The encapsulation message is used for: when receiving the encapsulation message, the second SDN controller determines according to the identifier packet encapsulated in the encapsulation message that a cross-SDN-domain link exists between a second device sending the identifier packet to the first device and the first device.

Further, this embodiment may be applied to an SDN controller used as a non-initiator discovering a cross-SDN-domain link. The SDN controller may initiate cross-SDN-domain link discovery, and may be also used as a non-initiator to process a received packet when another SDN controller initiates cross-SDN-domain link discovery. A same SDN controller not only may initiate cross-SDN-domain link discovery, but also may used as a non-initiator to process a packet sent by an SDN controller used as an initiator. This embodiment is a process in which when used as a non-initiator, an SDN controller processes a received packet.

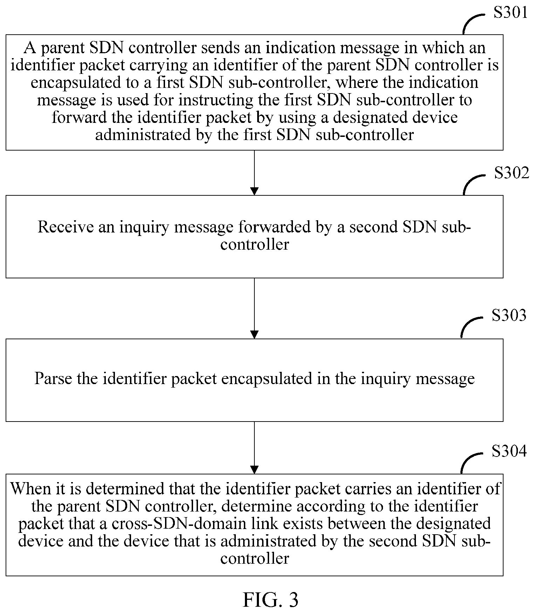

A link discovery method provided in an embodiment of the present invention is applied to a parent SDN controller side used as an initiator discovering a cross-SDN-domain link. As shown in FIG. 3, the method specifically includes the following steps:
S301: A parent SDN controller sends an indication message in which an identifier packet carrying an identifier of the parent SDN controller is encapsulated to a first SDN sub-controller, where the indication message is used for instructing the first SDN sub-controller to forward the identifier packet by using a designated device administrated by the first SDN sub-controller.

S302: Receive an inquiry message forwarded by a second SDN sub-controller, where the inquiry message is an inquiry message that is used for inquiring of the second SDN sub-controller about port information of a port forwarding the identifier packet and in which the identifier packet is encapsulated by a device administrated by the second SDN sub-controller after the device receives the identifier packet sent by the designated device.

S303: Parse the identifier packet encapsulated in the inquiry message.

S304: When it is determined that the identifier packet carries an identifier of the parent SDN controller, determine according to the identifier packet that a cross-SDN-domain link exists between the designated device and the device administrated by the second SDN sub-controller.

Further, as the first SDN sub-controller, when the parent SDN controller initiates cross-SDN-domain link discovery, the method specifically includes the following steps:
Step 1: The first SDN sub-controller receives an indication message sent by the parent SDN controller in which the identifier packet is encapsulated, where the indication message is used for instructing the first SDN sub-controller to forward the identifier packet by using a designated device administrated by the first SDN sub-controller.

Step 2: Forward the indication message to the designated device that is configured to forward the identifier packet according to the indication message.

Further, according to a link discovery method provided in an embodiment of the present invention, a cross-SDN-domain link between SDN domains separately corresponding to multiple SDN sub-controllers administrated by a parent SDN controller may be automatically discovered by using the parent SDN controller. Further, when the parent SDN controller sends an indication message to a first SDN sub-controller, and receives an inquiry message from a second SDN sub-controller, where an identifier packet carried in the indication message and the inquiry message carries an identifier of the parent SDN controller. Therefore, it may be determined that a link exists between an SDN domain administrated by the first SDN sub-controller and an SDN domain administrated by the second SDN sub-controller.

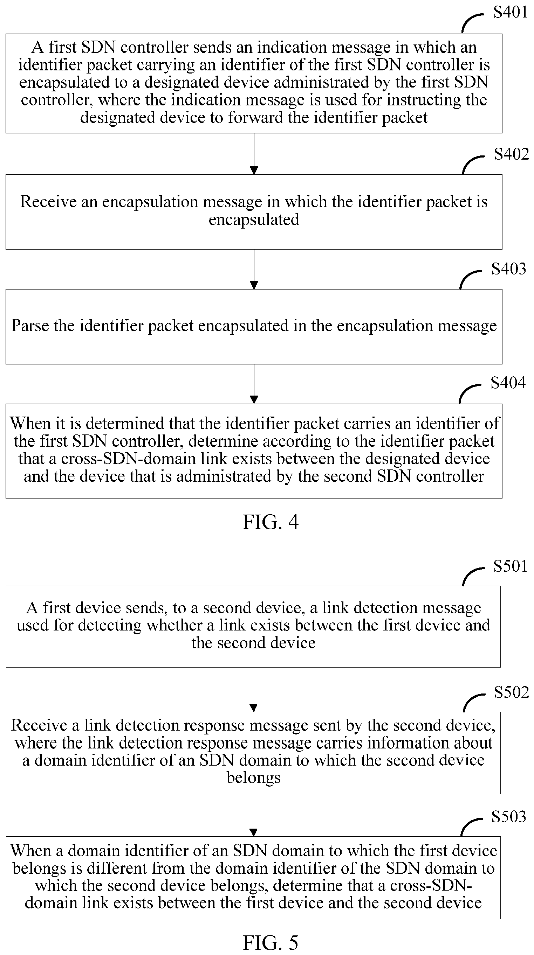

A link discovery method provided in an embodiment of the present invention is applied to a first SDN controller side used as an initiator discovering a cross-SDN-domain link. As shown in FIG. 4, the method specifically includes the following steps:
S401: A first SDN controller sends an indication message in which an identifier packet carrying an identifier of the first SDN controller is encapsulated to a designated device administrated by the first SDN controller, where the indication message is used for instructing the designated device to forward the identifier packet.

S402: Receive an encapsulation message in which the identifier packet is encapsulated, where the encapsulation message is determined according to a first inquiry message in which the identifier packet is encapsulated by a device administrated by a second SDN controller after the device receives the identifier packet sent by the designated device and that is used for inquiring of the second SDN controller about port information of a port forwarding the identifier packet.

S403: Parse the identifier packet encapsulated in the encapsulation message.

S404: When it is determined that the identifier packet carries an identifier of the first SDN controller, determine according to the identifier packet that a cross-SDN-domain link exists between the designated device and the device that is administrated by the second SDN controller.

Further, according to a link discovery method provided in an embodiment of the present invention, a cross-SDN-domain link between an SDN domain administrated by an SDN controller and another SDN domain may be automatically discovered by using the SDN controller.

A link discovery method provided in an embodiment of the present invention is applied to a device side used as an initiator discovering a cross-SDN-domain link. As shown in FIG. 5, the method specifically includes the following steps:
S501: A first device sends, to a second device, a link detection message used for detecting whether a link exists between the first device and the second device.

S502: Receive a link detection response message sent by the second device, where the link detection response message carries information about a domain identifier of an SDN domain to which the second device belongs. S503: When a domain identifier of an SDN domain to which the first device belongs is different from the domain identifier of the SDN domain to which the second device belongs, determine that a cross-SDN-domain link exists between the first device and the second device.

Further, according to a link discovery method provided in an embodiment of the present invention, a device administrated by an SDN controller initiates cross-SDN-domain link discovery.

Further, in S502, the domain identifier of an SDN domain may be domain identifier information of OSPF (Open Shortest Path First), or domain identifier information of ISIS (Intermediate System to Intermediate System), or domain identifier information of BGP (Border Gateway Protocol).

Further, in the foregoing embodiment of the present invention, the inquiry message may be a Packet-in message in an Openflow protocol, and the indication message may be a Packet-out message in the Openflow protocol.

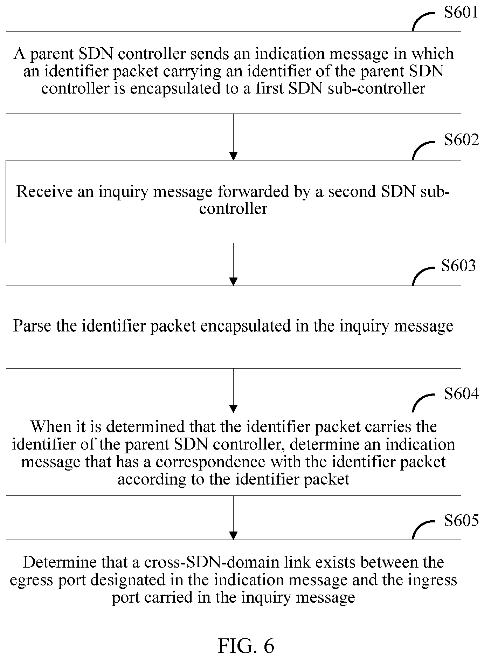

FIG. 6 shows a link discovery method provided in an embodiment of the present invention. The method is applied to a parent SDN controller side used as an initiator discovering a cross-SDN-domain link, and specifically includes the following steps:
S601: A parent SDN controller sends an indication message in which an identifier packet carrying an identifier of the parent SDN controller is encapsulated to a first SDN sub-controller, where the indication message is specifically used for instructing a designated device to send the identifier packet by using a designated egress port, and the identifier packet has a correspondence with the indication message.

In this step, the designated device may be a device directly or indirectly administrated by the first SDN sub-controller, in other words, another SDN controller may not exist between the first SDN sub-controller and the designated device or multiple layers of SDN controllers may exist between the first SDN sub-controller and the designated device.

Further, the identifier packet is used for identifying a builder of the identifier packet as the parent SDN controller. During specific implementation, the identifier packet may be made to carry an identifier of the parent SDN controller, so that when parsing the identifier packet, another SDN controller can determine that the builder of the identifier packet is not the another SDN controller itself, thereby forwarding the identifier packet. Moreover, the identifier packet encapsulated in the indication message has a correspondence with the indication message, that is, while identifying that the identifier packet is built by the builder, the builder of the identifier packet can also determine which indication message in which the identifier packet is encapsulated is sent by the builder itself. So that when receiving an inquiry message in which the identifier packet is encapsulated, the SDN controller can determine the indication message matching the inquiry message according to the identifier packet, thereby determining that a link exists between an egress port and an ingress port. During specific implementation, the identifier packet may be made to carry a packet sequence number of the indication message, or another identifier identifying the indication message, which makes the identifier packet correspond to the indication message.

Further, devices administrated by each SDN sub-controller may include multiple ports. A parent controller may send an indication message to each of multiple SDN sub-controllers, to indicate that multiple ports of multiple devices administrated by each SDN sub-controller of the multiple SDN sub-controllers are used as designated egress ports, forwarding an identifier packet encapsulated in the indication message by using each egress port, and receiving an inquiry message for the forwarded identifier packet. The identifier packet encapsulated in the indication message has a correspondence with the indication message, and therefore, when receiving multiple inquiry messages, the parent SDN controller may determine, according to an identifier packet encapsulated in each inquiry message, an indication message corresponding to the identifier packet, and can also determine an indication message corresponding to the inquiry message, thereby determining an egress port and an ingress port between which a link exists.

S602: Receive an inquiry message forwarded by a second SDN sub-controller, where the inquiry message is specifically an inquiry message that carries port information of an ingress port, in which the identifier packet is encapsulated by the device administrated by the second SDN sub-controller after the device administrated by the second SDN sub-controller receives, by using the ingress port, the identifier packet sent by the designated device by using the egress port. The inquiry message is used for inquiring of the second SDN sub-controller about the port information of the port forwarding the identifier packet.

In this step, a device administrated by the second SDN sub-controller may be a device directly or indirectly administrated by the second SDN sub-controller, in other words, another SDN controller may not exist between the second SDN sub-controller and the device or multiple layers of SDN controllers may exist between the second SDN sub-controller and the device.

S603: Parse the identifier packet encapsulated in the inquiry message.

S604: When it is determined that the identifier packet carries the identifier of the parent SDN controller, determine an indication message that has a correspondence with the identifier packet according to the identifier packet.

S605: Determine that a cross-SDN-domain link exists between the egress port designated in the indication message and the ingress port indicated in the inquiry message.

Further, when SDN sub-controllers to which the egress port and the ingress port between which a link exists determined by the parent SDN controller separately belong are the same SDN sub-controller, the link existing between the determined egress port and ingress port is a link in a domain of the SDN sub-controller. When SDN sub-controllers to which the egress port and the ingress port between which a link exists determined by the parent SDN controller separately belong are different SDN sub-controllers, a cross-SDN-domain link existing between the determined egress port and ingress port is a cross-SDN-domain link between domains of the foregoing two SDN sub-controllers.

Further, the parent SDN controller collects statistics on link attribute information of a link corresponding to a port of each device in an SDN domain administrated by the parent SDN controller in advance, where the link attribute information of the link corresponding to the port may include a link type, a link bandwidth, a type of a signal transmitted on a link, a wavelength of a signal transmitted on a link, a link channel quantity and the like. The parent SDN controller may find, according to port information of the egress port and the ingress port between which the cross-SDN-domain link is formed, link attribute information of links separately corresponding to the egress port and the ingress port from the link attribute information of the links corresponding to the ports of the foregoing devices, thereby determining whether the link formed between the egress port and the ingress port has consistency. When some link attributes between the link attribute information of the link corresponding to the egress port and the link attribute information of the link corresponding to the ingress port are not consistent, such as, a type of a signal transmitted on a link and a signal wavelength, the egress port cannot communicate with the ingress port, and the parent SDN controller cannot obtain the determined link between the egress port and the ingress port. However, for some link attributes, even if the attributes of a link corresponding to the egress port are not consistent with those of a link corresponding to the ingress port, the egress port can still communicate with the ingress port, but efficiency is relatively low. For example, for a bandwidth attribute, if a link bandwidth of the egress port is 10 G, and a link bandwidth of the ingress port is 10 M, the egress port can communicate with the ingress port. But if a link is established between the egress port and the ingress port, the bandwidth of the egress port is wasted. In this case, the parent SDN controller may send alarm information to inform both communication parties of a disadvantage existing if the both communication parties communicate. Further, the parent SDN controller determines the link attribute information of the link corresponding to the egress port and the link attribute information of the link corresponding to the ingress port, where a link is formed between the egress port and the ingress port, so as to help the parent SDN controller manage the cross-SDN-domain link administrated by the parent SDN controller. For example, virtual network allocation may subsequently be performed according to port information of an egress port and an ingress port of each link.

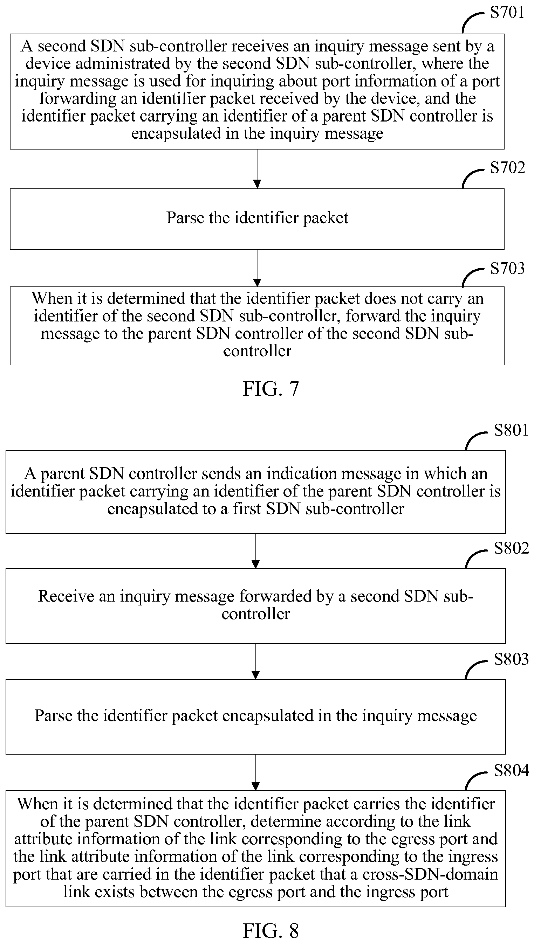

Corresponding to FIG. 6, FIG. 7 shows a link discovery method provided in an embodiment of the present invention. The method is applied to a second SDN sub-controller side used as a non-initiator discovering a cross-SDN-domain link, and specifically includes the following steps:
S701: A second SDN sub-controller receives an inquiry message sent by a device administrated by the second SDN sub-controller, where the inquiry message is used for inquiring about port information of a port forwarding an identifier packet received by the device and in which the identifier packet carrying an identifier of a parent SDN controller is encapsulated. The identifier packet encapsulated in the inquiry message is received by the device by using an ingress port, and the inquiry message further carries port information of the ingress port.

S702: Parse the identifier packet in S701.

S703: When it is determined that the identifier packet does not carry an identifier of the second SDN sub-controller, forward the inquiry message to the parent SDN controller of the second SDN sub-controller.

FIG. 8 shows a link discovery method provided in an embodiment of the present invention. The method is applied to a parent SDN controller side used as an initiator discovering a cross-SDN-domain link, and specifically includes the following steps:
S801: A parent SDN controller sends an indication message in which an identifier packet carrying an identifier of the parent SDN controller is encapsulated to a first SDN sub-controller, where the indication message is specifically used for instructing a designated device to send the identifier packet by using a designated egress port; and the identifier packet sent by the designated device by using the egress port carries link attribute information of a link corresponding to the egress port.

Further, in this step, the link attribute information of the link corresponding to the egress port may be added to the identifier packet by the parent SDN controller, the first SDN sub-controller, or the designated device administrated by the first SDN sub-controller.

S802: Receive an inquiry message forwarded by a second SDN sub-controller, where the inquiry message is an inquiry message that is used for inquiring of the second SDN sub-controller about port information of a port forwarding the identifier packet and in which the identifier packet is encapsulated by a device administrated by the second SDN sub-controller after the device receives the identifier packet sent by the designated device, and the identifier packet encapsulated in the inquiry message further carries link attribute information of a link corresponding to an ingress port.

S803: Parse the identifier packet encapsulated in the inquiry message.

S804: When it is determined that the identifier packet carries the identifier of the parent SDN controller, determine, according to the link attribute information of the link corresponding to the egress port and the link attribute information of the link corresponding to the ingress port that are carried in the identifier packet, that a cross-SDN-domain link exists between the egress port and the ingress port.

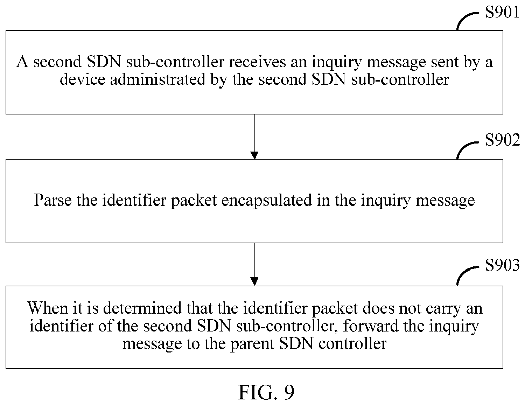

Further, in this step, besides determining that the cross-SDN-domain link exists between the egress port and the ingress port, the parent SDN controller further obtains the link attribute information of the link corresponding to the egress port and the link attribute information of the link corresponding to the ingress port, thereby further determining whether the link formed between the egress port and the ingress port has consistency on the basis of determining that the link exists between the egress port and the ingress port. Corresponding to FIG. 8, FIG. 9 shows a link discovery method provided in an embodiment of the present invention. The method is applied to a second SDN sub-controller side used as a non-initiator discovering a cross-SDN-domain link, and as shown in FIG. 9, specifically includes the following steps:
S901: A second SDN sub-controller receives an inquiry message sent by a device administrated by the second SDN sub-controller, where the inquiry message is used for inquiring about port information of a port forwarding an identifier packet received by the device, and in which the identifier packet carrying an identifier of a parent SDN controller is encapsulated, where the identifier packet is the identifier packet that is received by the device by using ingress port, and carries link attribute information of a link corresponding to an egress port of the parent SDN controller. The identifier packet encapsulated in the inquiry message sent by the device to the second SDN sub-controller further carries link attribute information of a link corresponding to the ingress port.

Further, in this step, the second SDN sub-controller receives the identifier packet that is received by the device administrated by the second SDN sub-controller by using ingress port, where the identifier packet carries the link attribute information of the link corresponding to the egress port of the device that sends the identifier packet to the ingress port. Before the inquiry message is sent to the second SDN sub-controller, the link attribute information of the link corresponding to the ingress port may be added to the identifier packet.

S902: Parse the identifier packet in S901.

S903: When it is determined that the identifier packet does not carry an identifier of the second SDN sub-controller, forward the inquiry message to the parent SDN controller.

Further, in this embodiment, corresponding to FIG. 6 and FIG. 7, or corresponding to FIG. 8 and FIG. 9, this embodiment is applied to a first SDN sub-controller side, and specifically includes the following steps:
Step 1: The first SDN sub-controller receives an indication message sent by the parent SDN controller and in which the identifier packet is encapsulated, where the indication message is used for instructing the first SDN sub-controller to send the identifier packet by using a designated egress port, and the identifier packet has a correspondence with the indication message.

Step 2: Forward the indication message to the designated device that is configured to forward the identifier packet by using the egress port according to the indication message.

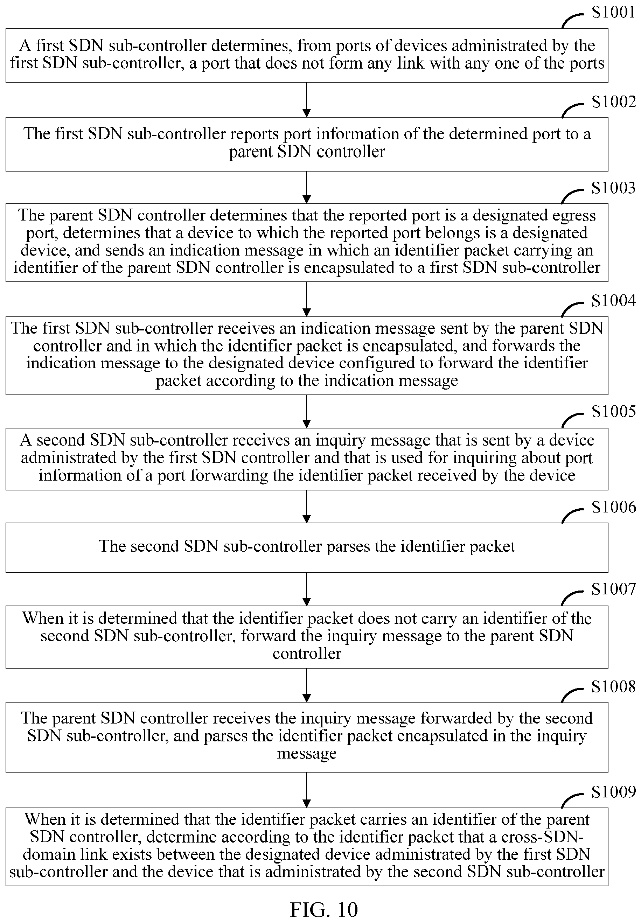

FIG. 10 shows a link discovery method according to an embodiment of the present invention, where the method is applied to a parent SDN controller, a first SDN sub-controller, and a second SDN sub-controller side. In this embodiment, the first SDN sub-controller performs initiation and the parent SDN controller performs cross-SDN-domain link discovery. The parent SDN controller may not need to judge whether an egress port and an ingress port between which a link determined exists belong to the same SDN sub-controller, to determine whether the link between the ingress port and the egress port is a cross-domain link. But each SDN sub-controller performs automatically discovery on a port that does not form any link with ports in SDN domains administrated by the SDN sub-controllers, and reports the port to the parent SDN controller. The parent SDN controller determines, according to the reported port, whether the reported port can form a cross-SDN-domain link. As shown in FIG. 10, the method specifically includes the following steps:
S1001: A first SDN sub-controller determines, from ports of devices administrated by the first SDN sub-controller, a port that does not form any link with any one of the ports.

In this step, a method for determining a port that does not form any link with any one of the ports of the devices administrated by the first SDN sub-controller may be: the first SDN sub-controller separately sends an indication message to each device administrated by the first SDN sub-controller, where for each device, an identifier packet that is built by the first SDN sub-controller and has a correspondence with the indication message is encapsulated in the indication message received by the device. The indication message is used for instructing the device to send the identifier packet by using an egress port designated in the indication message, and by using the designated egress port, the device sends the identifier packet to an ingress port, of another device, having a communicating link with the designated egress port. After the another device receives the identifier packet, because at a link discovery stage, a path used for instructing to forward the received packet does not exist in the device. The another device encapsulates the identifier packet in an inquiry message, inquires of an SDN controller to which the another device belongs about port information of a port forwarding the identifier packet, and adds port information of the ingress port of the received identifier packet to the inquiry message. When the device and the another device belong to a same SDN controller, that is, the foregoing first SDN sub-controller, the first SDN sub-controller determines, according to a correspondence between the identifier packet encapsulated in the inquiry message and an indication message sent by the first SDN sub-controller, that a communicating link exists between the ingress port indicated in the inquiry message and the egress port designated in the indication message. But when the device and the another device belong to different SDN controllers, that is, the another device does not belong to the first SDN sub-controller, the first SDN sub-controller does not receive any inquiry message. In other words, when the first SDN sub-controller has not received any inquiry message in which the identifier packet corresponding to the indication message sent by the first SDN sub-controller is encapsulated, the first SDN sub-controller may determine that the egress port designated in the indication message is an empty port, or a port that has a link with an SDN domain other than an SDN domain administrated by the first SDN sub-controller, and may report the egress port to the parent SDN controller of the first SDN sub-controller.

S1002: The first SDN sub-controller reports port information of the determined port to a parent SDN controller.

S1003: The parent SDN controller determines that the reported port is a designated egress port, determines that a device to which the reported port belongs is a designated device, and sends an indication message in which an identifier packet carrying an identifier of the parent SDN controller is encapsulated to a first SDN sub-controller, where the indication message is used for instructing the first SDN sub-controller to forward the identifier packet by using the designated device administrated by the first SDN sub-controller.

S1004: The first SDN sub-controller receives an indication message sent by the parent SDN controller and in which the identifier packet is encapsulated, and forwards the indication message to the designated device configured to forward the identifier packet according to the indication message.

S1005: A second SDN sub-controller receives an inquiry message that is sent by a device administrated by the first SDN controller and that is used for inquiring about port information of a port forwarding the identifier packet received by the device, where the identifier packet carrying an identifier of a parent SDN controller is encapsulated in the inquiry message.

In this step, after receiving the identifier packet sent by the foregoing designated device, the device administrated by the second SDN sub-controller encapsulates the identifier packet in an inquiry message and sends the inquiry message to the second SDN sub-controller.

S1006: The second SDN sub-controller parses the identifier packet.

S1007: When it is determined that the identifier packet does not carry an identifier of the second SDN sub-controller, forward the inquiry message to the parent SDN controller.

S1008: The parent SDN controller receives the inquiry message forwarded by the second SDN sub-controller, and parses the identifier packet encapsulated in the inquiry message.

S1009: When it is determined that the identifier packet carries an identifier of the parent SDN controller, determine according to the identifier packet that a cross-SDN-domain link exists between the designated device administrated by the first SDN sub-controller and the device administrated by the second SDN sub-controller.

This embodiment is applied to the first SDN sub-controller side, and may specifically include the following steps:
Step 1: Determine, from ports of devices that are administrated, a port that does not form any link with any one of the ports.

Step 2: Report port information of the determined port to a parent SDN controller, where the reported port information is used by the parent SDN controller to determine that a reported port is the designated egress port, and determine that a device to which the reported port belongs is the designated device.

Step 3: Receive an indication message sent by the parent SDN controller and in which the identifier packet is encapsulated, where the indication message is used for instructing the first SDN sub-controller to send the identifier packet by using a designated egress port, and the identifier packet has a correspondence with the indication message.

Step 4: Forward the indication message to the designated device that is configured to forward the identifier packet by using the egress port according to the indication message.

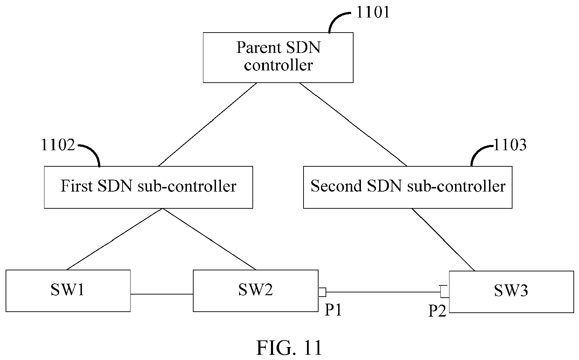

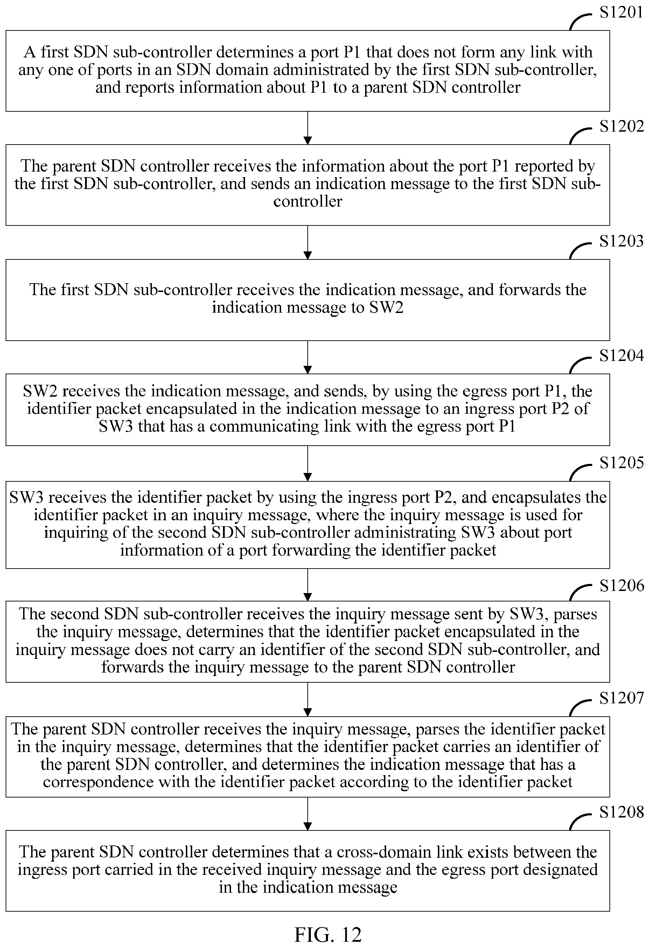

Description is made below by using examples:
Example 1: as shown in FIG. 11, a parent SDN controller 1101 administrates a first SDN sub-controller 1102 and a second SDN sub-controller 1103, the first SDN sub-controller 1102 administrates SW1 and SW2, the second SDN sub-controller 1103 administrates SW3, a link exists between SW1 and SW2, and a link exists between SW2 and SW3. Each SDN sub-controller is responsible for discovering a link in an SDN domain administrated by the SDN sub-controller itself, and the parent SDN controller is responsible for discovering a link between SDN sub-domains administrated by the parent SDN controller. This example is a method in which the parent SDN controller 1101 discovers a cross-domain link between the first SDN sub-controller 1102 and the second SDN sub-controller 1103, and as shown in FIG. 12, specific steps include:
   S1201: A first SDN sub-controller 1102 determines a port P1 that does not form any link with any one of ports in an SDN domain administrated by the first SDN sub-controller 1102, and reports information about P1 to a parent SDN controller 1101.

S1202: The parent SDN controller 1101 receives the information about the port P1 reported by the first SDN sub-controller 1102, and sends an indication message to the first SDN sub-controller 1102, where an identifier packet that has a correspondence with the indication message and carries an identifier of the parent SDN controller 1101 is encapsulated in the indication message. The indication message is used for instructing SW2 administrated by the first SDN sub-controller 1102 to forward the identifier packet by using the egress port P 1. Further, in this step, the indication message may be a Packet-out message in an Openflow protocol, and the identifier packet may be an LLDP packet. The LLDP packet carries configuration information of the parent SDN controller 1101, such as, information about the parent SDN controller 1101 such as a main capability, a management address, a device identifier, and an interface identifier.

Further, when only one designated egress port exists, the identifier packet may not have a correspondence with the indication message. Because the parent SDN controller 1101 sends only one indication message, when an inquiry message in which the identifier packet in the indication message is encapsulated is received, the inquiry message may match the indication message.

S1203: The first SDN sub-controller 1102 receives the indication message, and forwards the indication message to SW2.

S1204: SW2 receives the indication message, and sends, by using the egress port P1, the identifier packet encapsulated in the indication message to an ingress port P2 of SW3 that has a communicating link with the egress port P 1.

S1205: SW3 receives the identifier packet by using the ingress port P2, and encapsulates the identifier packet in an inquiry message, where the inquiry message is used for inquiring of the second SDN sub-controller 1103 administrating SW3 about port information of a port forwarding the identifier packet, and the inquiry message carries port information of the ingress port P2.

In this step, the inquiry message may be a Packet-in message in the Openflow protocol.

S1206: The second SDN sub-controller 1103 receives the inquiry message sent by SW3, parses the inquiry message, determines that the identifier packet encapsulated in the inquiry message does not carry an identifier of the second SDN sub-controller 1103, and forwards the inquiry message to the parent SDN controller 1101. S1207: The parent SDN controller 1101 receives the inquiry message, parses the identifier packet in the inquiry message, determines that the identifier packet carries an identifier of the parent SDN controller 1101, and determines the indication message that has a correspondence with the identifier packet according to the identifier packet.

S1208: The parent SDN controller 1101 determines that a cross-domain link exists between the ingress port indicated in the received inquiry message and the egress port designated in the indication message.

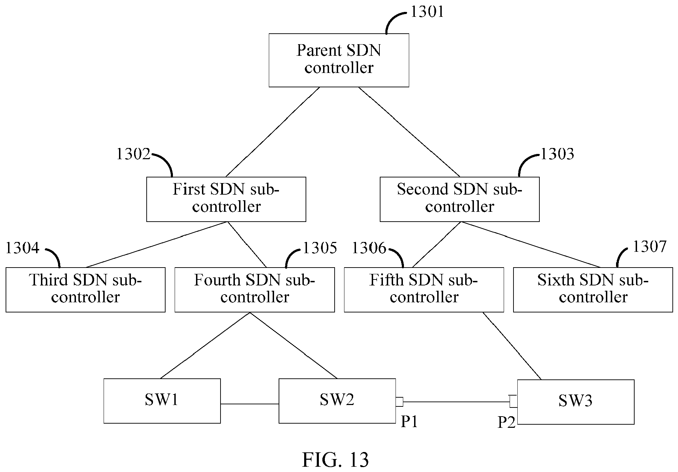

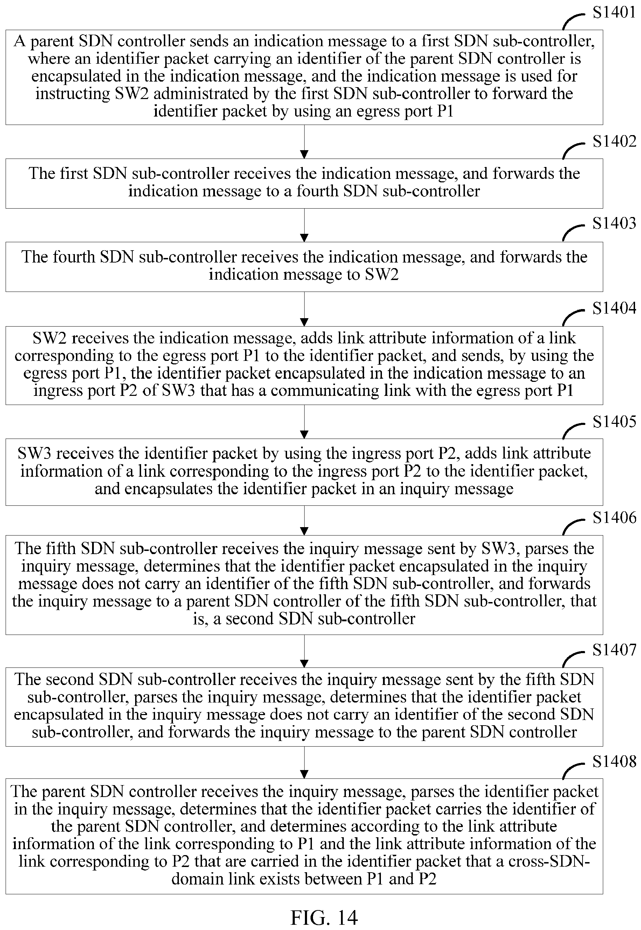

Example 2: as shown in FIG. 13, a parent SDN controller 1301 administrates a first SDN sub-controller 1302 and a second SDN sub-controller 1303. The first SDN sub-controller 1302 and the second SDN sub-controller 1303 are also separately used as parent SDN controllers, the first SDN sub-controller 1302 administrates a third SDN sub-controller 1304 and a fourth SDN sub-controller 1305, and the second SDN sub-controller 1303 administrates a fifth SDN sub-controller 1306 and a sixth SDN sub-controller 1307. The fourth SDN sub-controller 1305 administrates SW1 and SW2, the fifth SDN sub-controller 1306 administrates SW3, a link exists between SW1 and SW2, and a link exists between SW2 and SW3. Each SDN sub-controller is responsible for discovering a link in an SDN domain administrated by the SDN sub-controller, and the parent SDN controller is responsible for discovering a link between SDN sub-domains administrated by the parent SDN controller. This example is a method in which the parent SDN controller 1301 discovers a cross-domain link between the first SDN sub-controller 1302 and the second SDN sub-controller 1303, and as shown in FIG. 14, specific steps include:
S1401: A parent SDN controller 1301 sends an indication message to a first SDN sub-controller 1302, where an identifier packet carrying an identifier of the parent SDN controller 1301 is encapsulated in the indication message, and the indication message is used for instructing SW2 administrated by the first SDN sub-controller 1302 to forward the identifier packet by using an egress port P1.

In this step, an SDN domain administrated by the parent SDN controller is a union set of SDN domains administrated by SDN sub-controllers administrated by the parent SDN controller. That is, an SDN domain administrated by the first SDN sub-controller 1302 is a union set of SDN domains separately administrated by a third SDN sub-controller 1304 and a fourth SDN sub-controller 1305.

S1402: The first SDN sub-controller 1302 receives the indication message, and forwards the indication message to a fourth SDN sub-controller 1305.

In this step, the first SDN sub-controller 1302 is used as a parent SDN controller of the fourth SDN sub-controller 1305, and may also administrate SW2 administrated by the fourth SDN sub-controller 1305, and when receiving the indication message, the first SDN sub-controller 1302 determines according to the egress port designated in the indication message, that is, the P1 port of SW2 that the P1 port of SW2 is administrated by the fourth SDN sub-controller 1305, and forwards the indication message to the fourth SDN sub-controller 1305.

Further, the first SDN sub-controller 1302 may be responsible for discovering a link between SDN domains separately administrated by the third SDN sub-controller 1304 and the fourth SDN sub-controller 1305 administrated by the first SDN sub-controller 1302.

S1403: The fourth SDN sub-controller 1305 receives the indication message, and forwards the indication message to SW2.

S1404: SW2 receives the indication message, adds link attribute information of a link corresponding to the egress port P1 to the identifier packet, and sends, by using the egress port P1, the identifier packet encapsulated in the indication message to an ingress port P2 of SW3 that has a communicating link with the egress port P 1.

S1405: SW3 receives the identifier packet by using the ingress port P2, adds link attribute information of a link corresponding to the ingress port P2 to the identifier packet, and encapsulates the identifier packet in an inquiry message, where the inquiry message is used for inquiring of a fifth SDN sub-controller 1306 administrating SW3 about port information of a port forwarding the identifier packet.

S1406: The fifth SDN sub-controller 1306 receives the inquiry message sent by SW3, parses the inquiry message, determines that the identifier packet encapsulated in the inquiry message does not carry an identifier of the fifth SDN sub-controller 1306, and forwards the inquiry message to a parent SDN controller of the fifth SDN sub-controller 1306, that is, a second SDN sub-controller 1303.

S1407: The second SDN sub-controller 1303 receives the inquiry message sent by the fifth SDN sub-controller 1306, parses the inquiry message, determines that the identifier packet encapsulated in the inquiry message does not carry an identifier of the second SDN sub-controller 1303, and forwards the inquiry message to the parent SDN controller 1301.

S1408: The parent SDN controller 1301 receives the inquiry message, parses the identifier packet in the inquiry message, determines that the identifier packet carries the identifier of the parent SDN controller 1301, and determines, according to the link attribute information of the link corresponding to the egress port P1 and the link attribute information of the link corresponding to the ingress port P2 that are carried in the identifier packet, that a cross-SDN-domain link exists between the egress port P1 and the ingress port P2.

Further, the parent SDN controller and an SDN controller directly administrating a device may be spaced by multiple layers of SDN controllers.

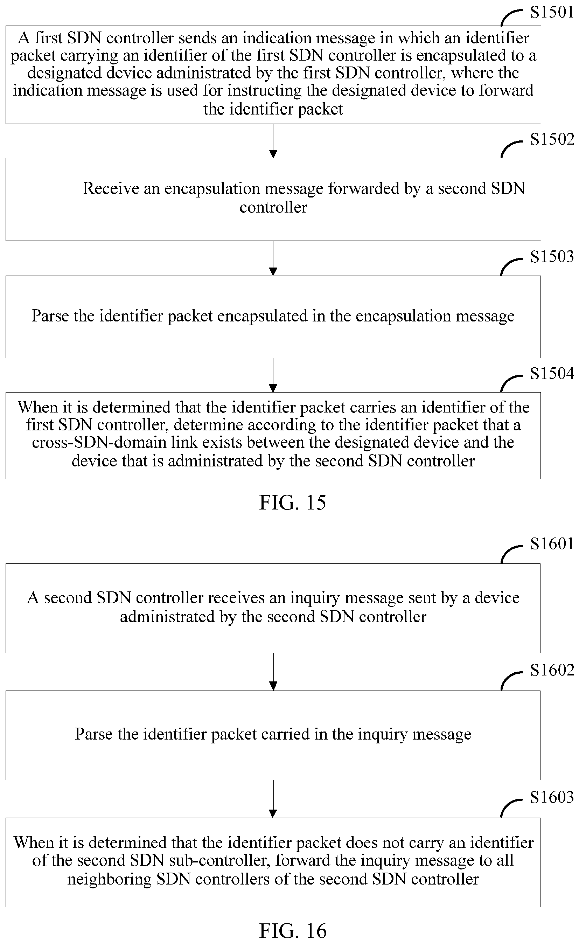

FIG. 15 shows a link discovery method provided in an embodiment of the present invention. The method is applied to a first SDN controller side used as an initiator of a cross-SDN-domain link, and as shown in FIG. 15, specifically includes the following steps:
S1501: A first SDN controller sends an indication message in which an identifier packet carrying an identifier of the first SDN controller is encapsulated to a designated device administrated by the first SDN controller, where the indication message is used for instructing the designated device to forward the identifier packet.

S1502: Receive an encapsulation message forwarded by a second SDN controller, where the second SDN controller is a neighboring SDN controller of the first SDN controller, and the encapsulation message is a first inquiry message in which the identifier packet is encapsulated by a device administrated by the second SDN controller after the device receives the identifier packet sent by the designated device and that is used for inquiring of the second SDN controller about port information of a port forwarding the identifier packet.

Further, in this step, an SDN controller neighboring the first SDN controller includes: an SDN controller that has a communicating physical link with the first SDN controller, or an SDN controller that has a communications mechanism with the first SDN controller (for example, a mechanism used for automatically building a neighboring relationship with the first SDN controller, that is, a HELLO communications mechanism exists), or an SDN controller that configures a neighboring relationship for the first SDN controller (for example, a neighboring relationship table is configured for the first SDN controller, and an SDN controller configured in the neighboring relationship table is used as a neighboring SDN controller of the first SDN controller).

S1503: Parse the identifier packet encapsulated in the encapsulation message.

S1504: When it is determined that the identifier packet carries an identifier of the first SDN controller, determine according to the identifier packet that a cross-SDN-domain link exists between the designated device and the device that is administrated by the second SDN controller.

In this embodiment, when the first SDN controller has a neighboring relationship with the second SDN controller, the method for discovering a cross-SDN-domain link may be implemented.

Corresponding to FIG. 15, FIG. 16 shows a link discovery method provided in an embodiment of the present invention. The method is applied to a second SDN controller side used as a non-initiator of a cross-SDN-domain link, and as shown in FIG. 16, specifically includes the following steps:
S1601: A second SDN controller receives an inquiry message sent by a device administrated by the second SDN controller, where the inquiry message is used for inquiring about port information of a port forwarding an identifier packet received by the device, and the identifier packet carrying an identifier of a first SDN controller is encapsulated in the inquiry message.

S1602: Parse the identifier packet in S1601.

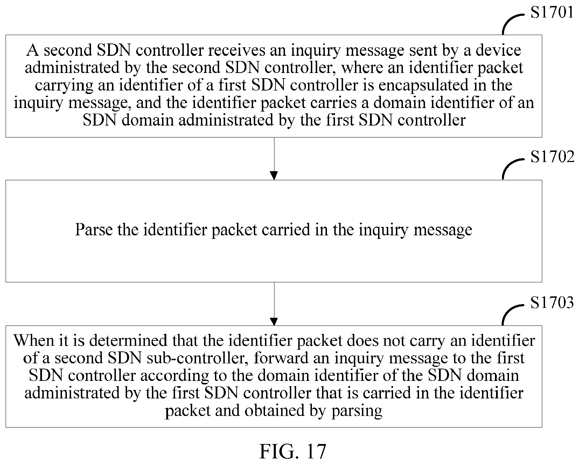

S1603: When it is determined that the identifier packet does not carry an identifier of the second SDN sub-controller, forward the inquiry message to all neighboring SDN controllers of the second SDN controller. Corresponding to FIG. 15, FIG. 17 shows a link discovery method provided in an embodiment of the present invention. The method is applied to a second SDN controller side used as a non-initiator discovering a cross-SDN-domain link, and as shown in FIG. 17, specifically includes the following steps:
S1701: A second SDN controller receives an inquiry message sent by a device administrated by the second SDN controller, where the inquiry message is used for inquiring about port information of a port forwarding an identifier packet received by the device, the identifier packet carrying an identifier of a first SDN controller is encapsulated in the inquiry message, and the identifier packet carries a domain identifier of an SDN domain administrated by the first SDN controller.

S1702: Parse the identifier packet in S1701.

S1703: When it is determined that the identifier packet does not carry an identifier of a second SDN sub-controller, forward an inquiry message to the first SDN controller according to the domain identifier of the SDN domain administrated by the first SDN controller that is carried in the identifier packet and obtained by parsing.

In this step, when the domain identifier of the SDN domain administrated by the first SDN controller is encapsulated in the identifier packet, because the second SDN controller may correspondingly store domain identifiers of neighboring SDN controllers of the second SDN controller and addresses of the SDN controllers in advance, and therefore, the inquiry message may be directly forwarded to the second SDN controller.

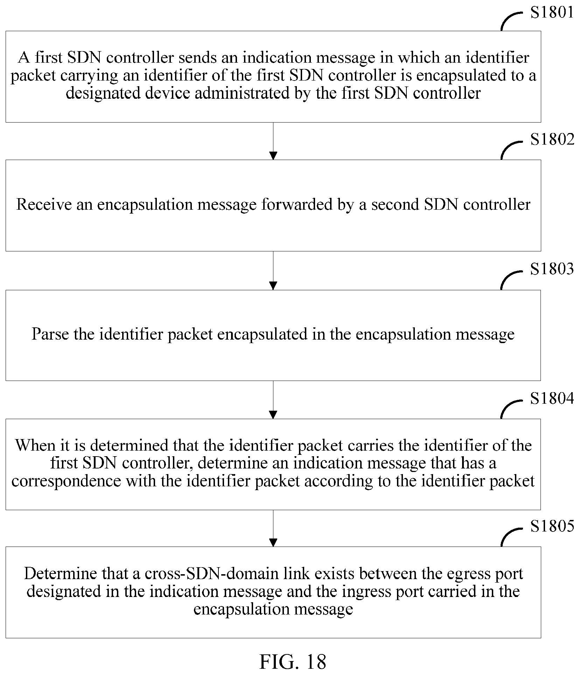

FIG. 18 shows a link discovery method provided in an embodiment of the present invention. The method is applied to a first SDN controller side used as an initiator discovering a cross-SDN-domain link, and as shown in FIG. 18, specifically includes the following steps:
S1801: A first SDN controller sends an indication message in which an identifier packet carrying an identifier of the first SDN controller is encapsulated to a designated device administrated by the first SDN controller, where the indication message is specifically used for instructing the designated device to send the identifier packet by using a designated egress port, and the identifier packet has a correspondence with the indication message.

S1802: Receive an encapsulation message forwarded by a second SDN controller, where the second SDN controller is a neighboring SDN controller of the first SDN controller, and the encapsulation message is specifically a first inquiry message that carries port information of an ingress port, in which the identifier packet is encapsulated by the device administrated by the second SDN controller after the device administrated by the second SDN sub-controller receives, by using the ingress port, the identifier packet sent by the designated device by using the egress port, and that is used for inquiring of the second SDN controller about the port information of the port forwarding the identifier packet.

S1803: Parse the identifier packet encapsulated in the encapsulation message.

S1804: When it is determined that the identifier packet carries the identifier of the first SDN controller, determine an indication message that has a correspondence with the identifier packet according to the identifier packet.

S1805: Determine that a cross-SDN-domain link exists between the egress port designated in the indication message and the ingress port indicated in the encapsulation message.

In this embodiment, when the first SDN controller has a neighboring relationship with the second SDN controller, the method for discovering a cross-SDN-domain link may be implemented.

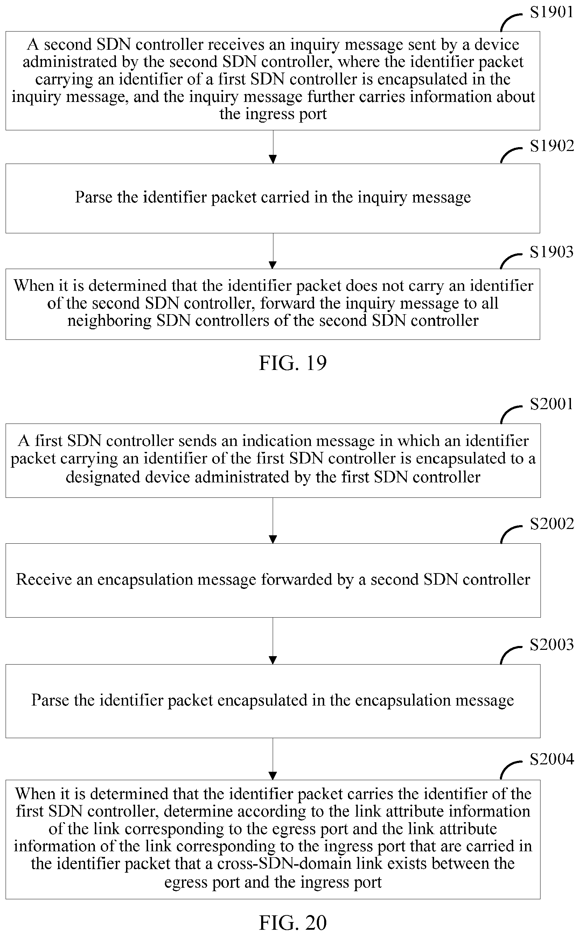

Corresponding to FIG. 18, FIG. 19 shows a link discovery method provided in an embodiment of the present invention. The method is applied to a second SDN controller side used as a non-initiator discovering a cross-SDN-domain link, and as shown in FIG. 19, specifically includes the following steps:
S1901: A second SDN controller receives an inquiry message sent by a device administrated by the second SDN controller, where the inquiry message is used for inquiring about port information of a port forwarding an identifier packet received by the device, the identifier packet carrying an identifier of a first SDN controller is encapsulated in the inquiry message, the identifier packet encapsulated in the inquiry message is received by the device by using an ingress port, and the inquiry message further carries port information of the ingress port.

S1902: Parse the identifier packet in S1901.

S1903: When it is determined that the identifier packet does not carry an identifier of the second SDN controller, forward the inquiry message to all neighboring SDN controllers of the second SDN controller.

In this step, when the identifier packet carries a domain identifier of a domain administrated by the first SDN controller, the inquiry message may be forwarded to the first SDN controller.

FIG. 20 shows a link discovery method provided in an embodiment of the present invention. The method is applied to a first SDN controller side used as an initiator discovering a cross-SDN-domain link, and as shown in FIG. 20, specifically includes the following steps:
S2001: A first SDN controller sends an indication message in which an identifier packet carrying an identifier of the first SDN controller is encapsulated to a designated device administrated by the first SDN controller, where the indication message is specifically used for instructing the designated device to send the identifier packet by using a designated egress port; and the identifier packet sent by the designated device by using the egress port carries link attribute information of a link corresponding to the egress port.

S2002: Receive an encapsulation message forwarded by a second SDN controller, where the second SDN controller is a neighboring SDN controller of the first SDN controller, and the encapsulation message is a first inquiry message in which the identifier packet is encapsulated by a device administrated by the second SDN controller after the device receives the identifier packet sent by the designated device and that is used for inquiring of the second SDN controller about port information of a port forwarding the identifier packet, and the identifier packet encapsulated in the first inquiry message further carries link attribute information of a link corresponding to an ingress port.

Further, in this step, the link attribute information of the link corresponding to the ingress port indicated in the identifier packet encapsulated in the first inquiry message may be added to the identifier packet after the device administrated by the second SDN controller receives the identifier packet sent by the designated device. S2003: Parse the identifier packet encapsulated in the encapsulation message.

S2004: When it is determined that the identifier packet carries the identifier of the first SDN controller, determine according to the link attribute information of the link corresponding to the egress port and the link attribute information of the link corresponding to the ingress port that are carried in the identifier packet that a cross-SDN-domain link exists between the egress port and the ingress port.

In this embodiment, when the first SDN controller has a neighboring relationship with the second SDN controller, the method for discovering a cross-SDN-domain link may be implemented.

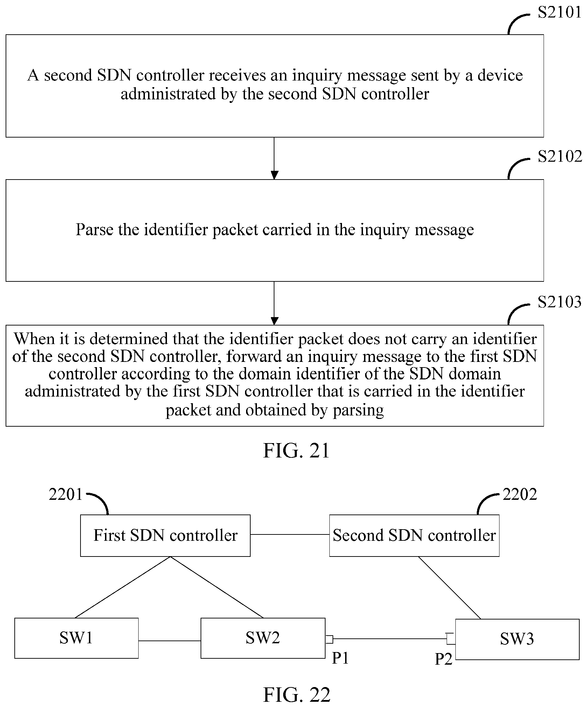

Corresponding to FIG. 20, FIG. 21 shows a link discovery method provided in an embodiment of the present invention. The method is applied to a second SDN controller side used as a non-initiator discovering a cross-SDN-domain link, and as shown in FIG. 21, specifically includes the following steps:
S2101: A second SDN controller receives an inquiry message sent by a device administrated by the second SDN controller, where the inquiry message is used for inquiring about port information of a port forwarding an identifier packet received by the device, and the identifier packet carrying an identifier of a first SDN controller is encapsulated in the inquiry message; the identifier packet is the identifier packet that is received by the device administrated by the second SDN controller by using an ingress port, and carries link attribute information of a link corresponding to an egress port of a device sending the identifier packet to the ingress port, and a domain identifier of an SDN domain in which the first SDN controller is located; and the identifier packet encapsulated in the inquiry message sent by the device administrated by the second SDN controller to the second SDN controller further carries link attribute information of a link corresponding to the ingress port.

Further, in this step, the link attribute information of the link corresponding to the egress port indicated in the identifier packet may be added to the identifier packet by the first SDN controller or a designated device administrated by the first SDN controller.

S2102: Parse the identifier packet in S2101.

S2103: When it is determined that the identifier packet does not carry an identifier of the second SDN controller, forward an inquiry message to the first SDN controller according to the domain identifier of the SDN domain administrated by the first SDN controller that is carried in the identifier packet and obtained by parsing.

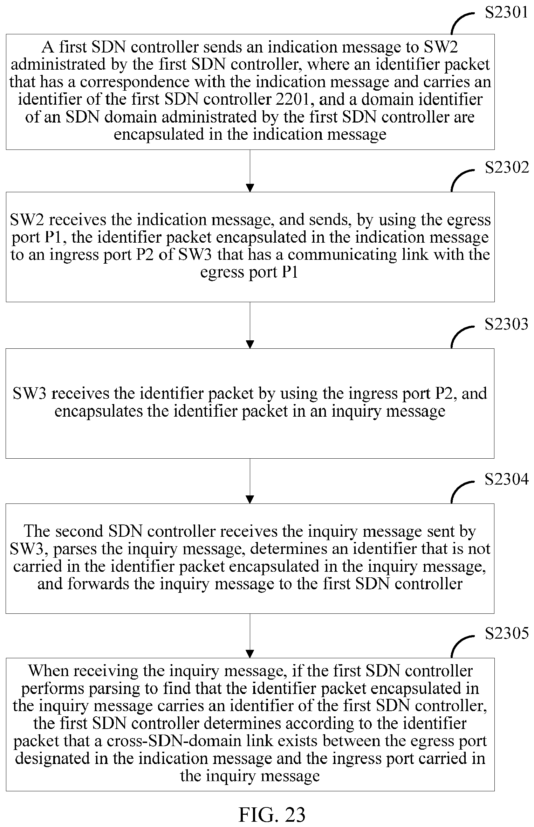

Further, if the domain identifier of the SDN domain to which the first SDN controller belongs is not carried in step S2103, the inquiry message may be forwarded to all neighboring SDN controllers of the second SDN controller in this step. Then, when receiving the inquiry message, another SDN controller except the first SDN controller may continue to forward the inquiry message to a neighboring SDN controller of the another SDN controller. In this case, because of guarantee of a split horizon technology, no information storm is caused. Description is made below by using examples:
Example 3: as shown in FIG. 22, a first SDN controller 2201 administrates SW1 and SW2, a second SDN controller 2202 administrates SW3, a link exists between SW1 and SW2, a link exists between SW2 and SW3, and the first SDN controller 2201 and the second SDN controller 2202 are neighboring SDN controllers. As shown in FIG. 23, specific steps include:
   S2301: A first SDN controller 2201 sends an indication message to SW2 administrated by the first SDN controller 2201, where an identifier packet that has a correspondence with the indication message and carries an identifier of the first SDN controller 2201 is encapsulated in the indication message, a domain identifier of an SDN domain administrated by the first SDN controller is further encapsulated in the identifier packet, and the indication message is used for instructing SW2 to send the identifier packet by using a designated port P1. Further, in this step, the first SDN controller 2201 may send an indication message to each of all devices administrated by the first SDN controller 2201, and this step is an operation performed when SW2 receives the indication message that instructs to send the identifier packet by using the port P 1.

Further, in this step, the indication message may be a Packet-out message in the Openflow protocol.

S2302: SW2 receives the indication message, and sends, by using the egress port P1, the identifier packet encapsulated in the indication message to an ingress port P2 of SW3 that has a communicating link with the egress port P 1.

S2303: SW3 receives the identifier packet by using the ingress port P2, and encapsulates the identifier packet in an inquiry message, where the inquiry message is used for inquiring of a second SDN controller 2202 administrating SW3 about port information of a port forwarding the identifier packet, and the inquiry message carries port information of the ingress port P2.

Further, in this step, the inquiry message may be a Packet-in message in the Openflow protocol.

S2304: The second SDN controller 2202 receives the inquiry message sent by SW3, parses the inquiry message, determines an identifier that is not carried in the identifier packet encapsulated in the inquiry message, and forwards the inquiry message to the first SDN controller 2201.

S2305: When receiving the inquiry message, if the first SDN controller 2201 performs parsing to find that the identifier packet encapsulated in the inquiry message carries an identifier of the first SDN controller 2201, the first SDN controller 2201 determines the indication message that has a correspondence with the identifier packet according to the identifier packet, and determines that a cross-SDN-domain link exists between the egress port designated in the indication message and the ingress port indicated in the inquiry message.

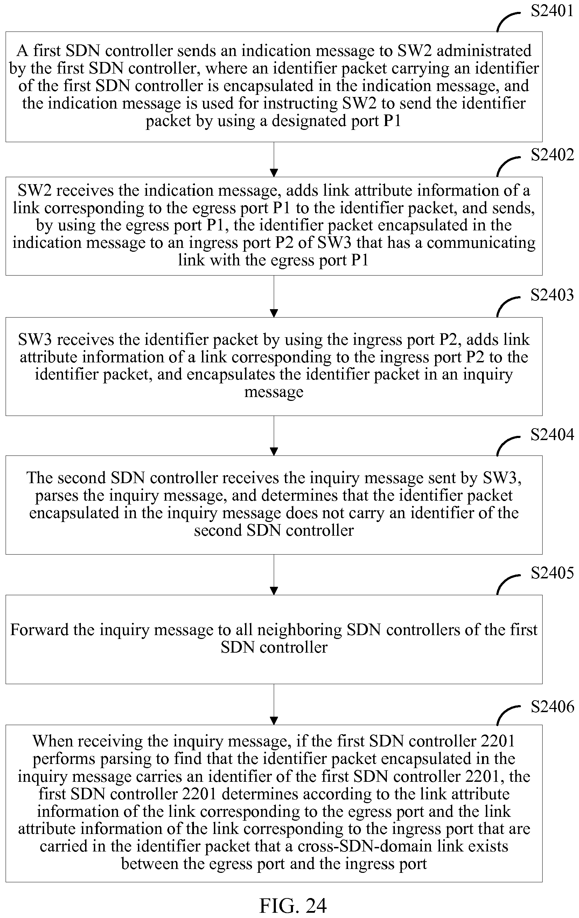

Example 4: FIG. 22 continues to be used as an example, and specific steps are shown in FIG. 24, and include:
S2401: A first SDN controller 2201 sends an indication message to SW2 administrated by the first SDN controller 2201, where an identifier packet carrying an identifier of the first SDN controller 2201 is encapsulated in the indication message, and the indication message is used for instructing SW2 to send the identifier packet by using a designated port P1.

Further, in this step, the indication message may be a Packet-out message in the Openflow protocol.

S2402: SW2 receives the indication message, adds link attribute information of a link corresponding to the egress port P1 to the identifier packet, and sends, by using the egress port P1, the identifier packet encapsulated in the indication message to an ingress port P2 of SW3 that has a communicating link with the egress port P 1.

S2403: SW3 receives the identifier packet by using the ingress port P2, adds link attribute information of a link corresponding to the ingress port P2 to the identifier packet, and encapsulates the identifier packet in an inquiry message, where the inquiry message is used for inquiring of a second SDN controller 2202 administrating SW3 about port information of a port forwarding the identifier packet.

In this step, the inquiry message may be a Packet-in message in the Openflow protocol.

S2404: The second SDN controller 2202 receives the inquiry message sent by SW3, parses the inquiry message, and determines that the identifier packet encapsulated in the inquiry message does not carry an identifier of the second SDN controller 2202.

S2405: Forward the inquiry message to all neighboring SDN controllers of the first SDN controller 2201.

S2406: When receiving the inquiry message, if the first SDN controller 2201 performs parsing to find that the identifier packet encapsulated in the inquiry message carries an identifier of the first SDN controller 2201, the first SDN controller 2201 determines according to the link attribute information of the link corresponding to the egress port and the link attribute information of the link corresponding to the ingress port that are carried in the identifier packet that a cross-SDN-domain link exists between the egress port and the ingress port.

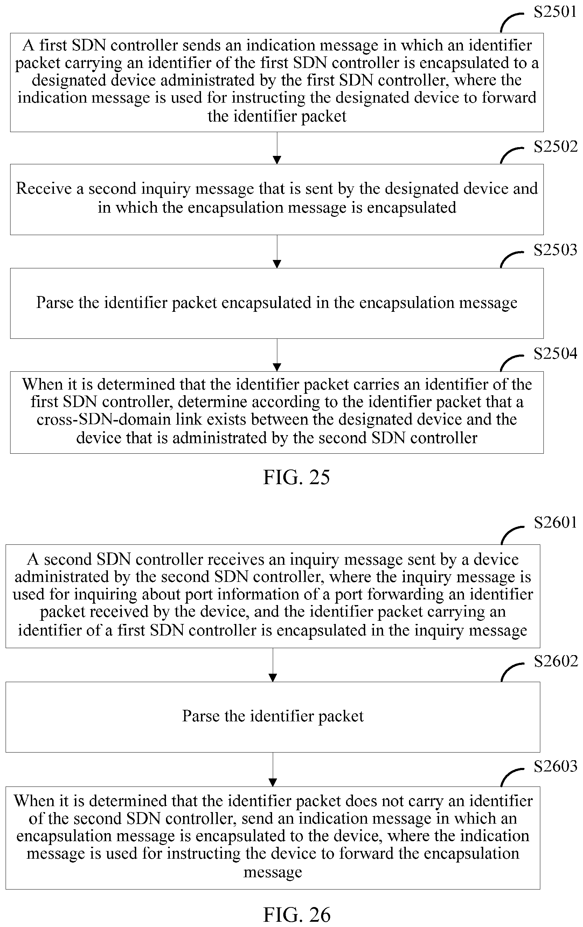

FIG. 25 shows a link discovery method provided in an embodiment of the present invention. The method is applied to a first SDN controller side used as an initiator discovering a cross-SDN-domain link, and as shown in FIG. 25, specifically includes the following steps:
S2501: A first SDN controller sends an indication message in which an identifier packet carrying an identifier of the first SDN controller is encapsulated to a designated device administrated by the first SDN controller, where the indication message is used for instructing the designated device to forward the identifier packet.

S2502: Receive a second inquiry message that is sent by the designated device and in which the encapsulation message is encapsulated, where the second inquiry message is used for inquiring about port information of a port forwarding the encapsulation message, and the encapsulation message is an encapsulation message that carries the identifier packet and is encapsulated by the second SDN controller according to the first inquiry message after a device administrated by the second SDN controller, after receiving the identifier packet sent by the designated device, encapsulates the identifier packet in the first inquiry message used for inquiring of the second SDN controller about the port information of the port forwarding the identifier packet.

S2503: Parse the identifier packet encapsulated in the encapsulation message.

S2504: When it is determined that the identifier packet carries an identifier of the first SDN controller, determine according to the identifier packet that a cross-SDN-domain link exists between the designated device and the device that is administrated by the second SDN controller.

Further, according to a link discovery method provided in an embodiment of the present invention, a cross-SDN-domain link between an SDN domain administrated by an SDN controller and another SDN domain may be automatically discovered by using the SDN controller. Moreover, the first SDN controller and the second SDN controller may be in any connection relationship, for example, the first SDN controller and the second SDN controller are not connected to each other, or the first SDN controller and the second SDN controller are neighboring SDN controllers, or the first SDN controller and the second SDN controller are connected to a same parent SDN controller.

Corresponding to FIG. 25, FIG. 26 shows a link discovery method provided in an embodiment of the present invention. The method is applied to a second SDN controller side used as a non-initiator of a cross-SDN-domain link, and as shown in FIG. 26, specifically includes the following steps:
S2601: A second SDN controller receives an inquiry message sent by a device administrated by the second SDN controller, where the inquiry message is used for inquiring about port information of a port forwarding an identifier packet received by the device, and the identifier packet carrying an identifier of a first SDN controller is encapsulated in the inquiry message.

S2602: Parse the identifier packet.

S2603: When it is determined that the identifier packet does not carry an identifier of the second SDN controller, send an indication message in which an encapsulation message is encapsulated to the device, where the indication message is used for instructing the device to forward the encapsulation message.

Further, in this step, when determining that the identifier packet does not carry the identifier of the second SDN controller, the second SDN controller needs to build the indication message that is used for instructing the device to send, by using an ingress port, a message encapsulated in the indication message along a link receiving the identifier packet, that is, the encapsulation message, and the identifier packet needs to be encapsulated in the encapsulation message, so that an SDN controller receiving the encapsulation message can determine, by using the identifier carried in the identifier packet, whether the identifier packet is built by the SDN controller.

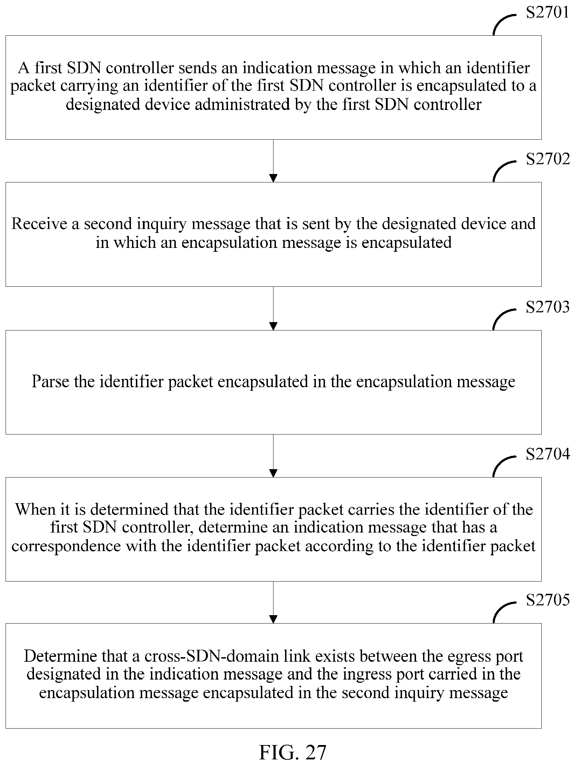

FIG. 27 shows a link discovery method provided in an embodiment of the present invention. The method is applied to a first SDN controller side used as an initiator discovering a cross-SDN-domain link, and as shown in FIG. 27, specifically includes the following steps:
S2701: A first SDN controller sends an indication message in which an identifier packet carrying an identifier of the first SDN controller is encapsulated to a designated device administrated by the first SDN controller, where the indication message is specifically used for instructing the designated device to send the identifier packet by using a designated egress port, and the identifier packet has a correspondence with the indication message.

S2702: Receive a second inquiry message that is sent by the designated device and in which an encapsulation message is encapsulated, where the second inquiry message is used for inquiring about port information of a port forwarding the encapsulation message, and the encapsulation message is specifically an encapsulation message that carries the identifier packet and port information of an ingress port and is encapsulated by a second SDN controller according to the first inquiry message after a device administrated by the second SDN controller, after receiving, by using the ingress port, the identifier packet sent by the designated device by using egress port, encapsulates the identifier packet in the first inquiry message that carries the port information of the ingress port and is used for inquiring of the second SDN controller about port information of a port forwarding the identifier packet.

S2703: Parse the identifier packet encapsulated in the encapsulation message.

S2704: When it is determined that the identifier packet carries the identifier of the first SDN controller, determine an indication message that has a correspondence with the identifier packet according to the identifier packet.

S2705: Determine that a cross-SDN-domain link exists between the egress port designated in the indication message and the ingress port indicated in the encapsulation message encapsulated in the second inquiry message.

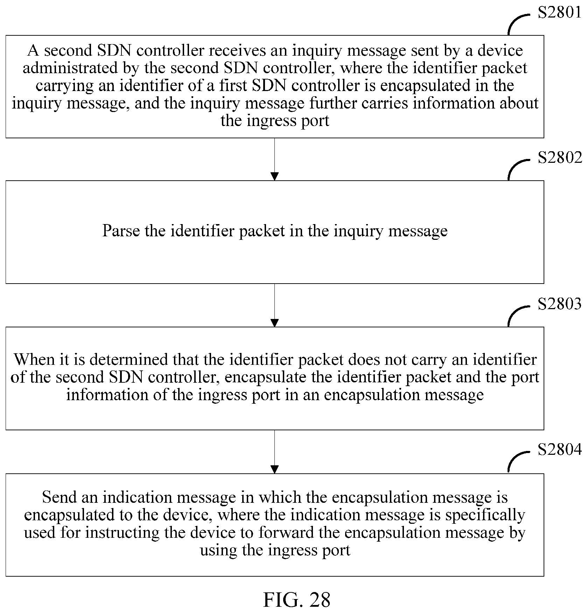

Corresponding to FIG. 27, FIG. 28 shows a link discovery method provided in an embodiment of the present invention. The method is applied to a second SDN controller side used as a non-initiator discovering a cross-SDN-domain link, and as shown in FIG. 28, specifically includes the following steps:
S2801: A second SDN controller receives an inquiry message sent by a device administrated by the second SDN controller, where the inquiry message is used for inquiring about port information of a port forwarding an identifier packet received by the device, the identifier packet carrying an identifier of a first SDN controller is encapsulated in the inquiry message, the identifier packet encapsulated in the inquiry message is received by the device by using an ingress port, and the inquiry message further carries port information of the ingress port.

S2802: Parse the identifier packet.

S2803: When it is determined that the identifier packet does not carry an identifier of the second SDN controller, encapsulate the identifier packet and the port information of the ingress port in an encapsulation message.

Further, in this step, when determining that the identifier packet does not carry the identifier of the second SDN controller, the second SDN controller needs to build the indication message that is used for instructing the device to send, by using an ingress port, a packet encapsulated in the indication message along a link receiving the identifier packet, that is, the encapsulation message, and the identifier packet needs to be encapsulated in the encapsulation message, so that an SDN controller receiving the encapsulation message can determine, by using the identifier carried in the identifier packet, whether the identifier packet is built by the SDN controller.

S2804: Send an indication message in which the encapsulation message is encapsulated to the device, where the indication message is specifically used for instructing the device to forward the encapsulation message by using the ingress port.

Further, the identifier packet and the port information of the ingress port are encapsulated in the encapsulation message, the identifier packet may be used for making the first SDN controller determine that a builder of the identifier packet is the first SDN controller, the port information of the ingress port may be used for enabling the first SDN controller, after determining the indication message corresponding to the identifier packet by using the identifier packet, to determine the ingress port corresponding to an egress port of a designated device administrated by the first SDN controller, thereby determining a cross-SDN-domain link between the egress port and the ingress port. For example, the second SDN controller may use the received inquiry message sent by the device as the encapsulation message, and encapsulate the inquiry message in the indication message, that is, the foregoing encapsulation message may be the inquiry message sent by the device administrated by the second SDN controller, because both the identifier packet and the port information of the ingress port are encapsulated in the inquiry message.

Further, the device administrated by the second SDN controller receives, by using the ingress port, the identifier packet that is sent by the designated device by using the egress port, and therefore, after the device administrated by the second SDN controller receives the indication message in which the encapsulation message is encapsulated, and forwards the encapsulation message by using the ingress port, the designated device administrated by the first SDN controller receives the encapsulation message from the egress port.

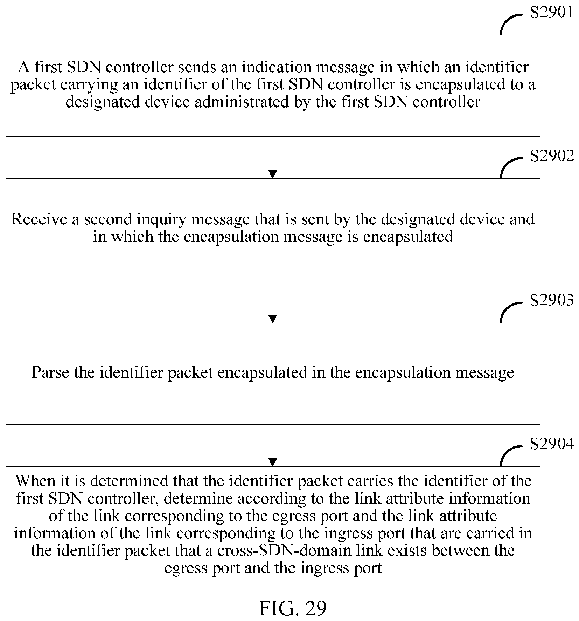

FIG. 29 shows a link discovery method provided in an embodiment of the present invention. The method is applied to a first SDN controller side used as an initiator discovering a cross-SDN-domain link, and as shown in FIG. 29, specifically includes the following steps:
S2901: A first SDN controller sends an indication message in which an identifier packet carrying an identifier of the first SDN controller is encapsulated to a designated device administrated by the first SDN controller, where the indication message is specifically used for instructing the designated device to send the identifier packet by using a designated egress port; and the identifier packet sent by the designated device by using the egress port carries link attribute information of a link corresponding to the egress port.

Further, in this step, the link attribute information of the link corresponding to the egress port may be added by the first SDN controller or the designated device to the identifier packet.

S2902: Receive a second inquiry message that is sent by the designated device and in which the encapsulation message is encapsulated, where the second inquiry message is used for inquiring about port information of a port forwarding the encapsulation message, and the encapsulation message is an encapsulation message that carries the identifier packet and is encapsulated by the second SDN controller according to the first inquiry message after a device administrated by the second SDN controller, after receiving the identifier packet sent by the designated device, encapsulates the identifier packet in the first inquiry message used for inquiring of the second SDN controller about the port information of the port forwarding the identifier packet, and the identifier packet encapsulated in the first inquiry message further carries link attribute information of a link corresponding to an ingress port.

Further, the link attribute information of the link corresponding to the ingress port may be added by the device administrated by the second SDN controller to the identifier packet before the identifier packet is encapsulated in the second inquiry message.

S2903: Parse the identifier packet encapsulated in the encapsulation message.

S2904: When it is determined that the identifier packet carries the identifier of the first SDN controller, determine according to the link attribute information of the link corresponding to the egress port and the link attribute information of the link corresponding to the ingress port that are carried in the identifier packet that a cross-SDN-domain link exists between the egress port and the ingress port.

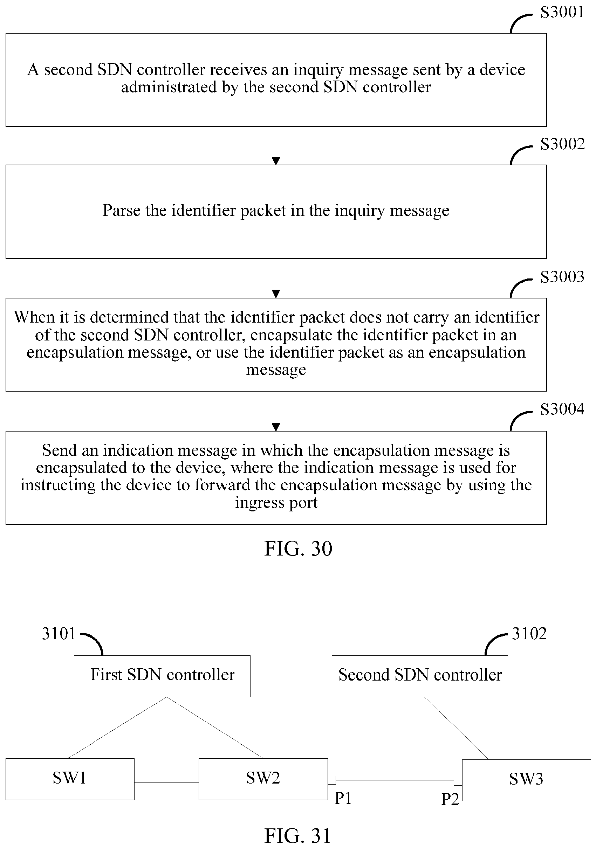

Corresponding to FIG. 29, FIG. 30 shows a link discovery method provided in an embodiment of the present invention. The method is applied to a second SDN controller side used as a non-initiator discovering a cross-SDN-domain link, and as shown in FIG. 30, specifically includes the following steps:
S3001: A second SDN controller receives an inquiry message sent by a device administrated by the second SDN controller, where the inquiry message is used for inquiring about port information of a port forwarding an identifier packet received by the device, the identifier packet carrying an identifier of a first SDN controller is encapsulated in the inquiry message, the identifier packet encapsulated in the inquiry message is the identifier packet that is received by the device by using an ingress port and carries link attribute information of a link corresponding to an egress port of the device sending the identifier packet to the ingress port, and the identifier packet encapsulated in the inquiry message sent by the device administrated by the second SDN controller to the second SDN controller further carries link attribute information of a link corresponding to the ingress port.

Further, after receiving the identifier packet in which the link attribute information of the link corresponding to the egress port is encapsulated, and before encapsulating the identifier packet in the inquiry message, the device administrated by the second SDN controller may add the link attribute information of the link corresponding to the ingress port to the identifier packet.

S3002: Parse the identifier packet.

S3003: When it is determined that the identifier packet does not carry an identifier of the second SDN controller, encapsulate the identifier packet in an encapsulation message, or use the identifier packet as an encapsulation message.

Further, in this step, when determining that the identifier packet does not carry the identifier of the second SDN controller, the second SDN controller needs to build the indication message that is used for instructing the device to send, by using an ingress port, a message encapsulated in the indication message along a link receiving the identifier packet, that is, the encapsulation message, and the identifier packet needs to be encapsulated in the encapsulation message, so that an SDN controller receiving the encapsulation message can determine, by using the identifier carried in the identifier packet, whether the identifier packet is built by the SDN controller, or directly encapsulates the identifier packet in the indication message.

S3004: Send an indication message in which the encapsulation message is encapsulated to the device, where the indication message is used for instructing the device to forward the encapsulation message by using the ingress port.

Description is made below by using examples:
Example 5: as shown in FIG. 31, a first SDN controller 3101 administrates SW1 and SW2, a second SDN controller 3102 administrates SW3, a link exists between SW1 and SW2, a link exists between SW2 and SW3, and the first SDN controller 3101 and the second SDN controller 3102 may be in any connection relationship, for example, the first SDN controller 3101 and the second SDN controller 3102 are not connected to each other, or the first SDN controller 3101 and the second SDN controller 3102 are neighboring SDN controllers, or the first SDN controller 3101 and the second SDN controller 3102 are connected to a same parent SDN controller.

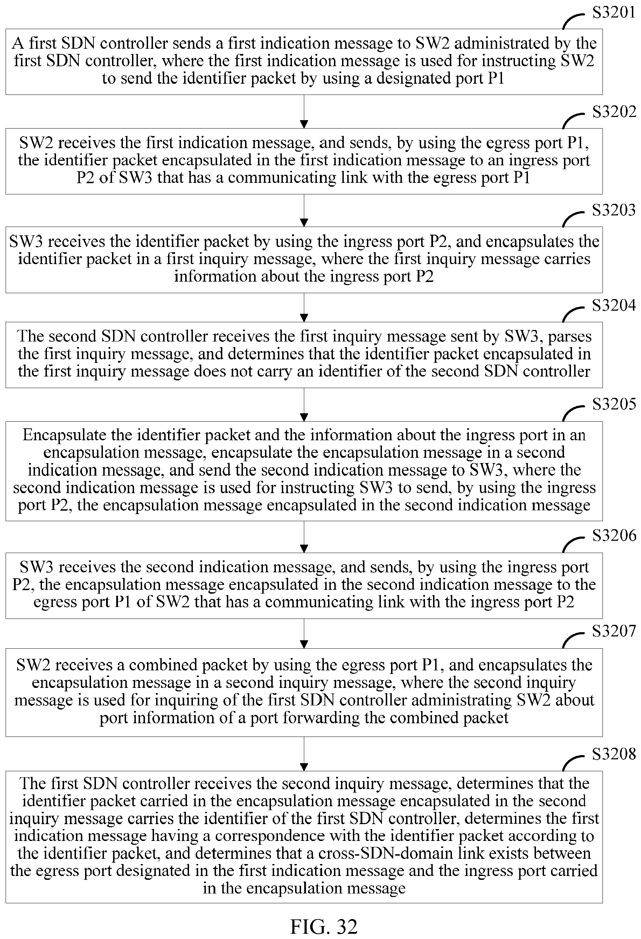

As shown in FIG. 32, specific steps include:
S3201: A first SDN controller 3101 sends a first indication message to SW2 administrated by the first SDN controller 3101, where an identifier packet that has a correspondence with the first indication message and carries an identifier of the first SDN controller 3101 is encapsulated in the first indication message, and the first indication message is used for instructing SW2 to send the identifier packet by using a designated port P1.

Further, in this step, the first indication message may be a Packet-out message in an Openflow protocol, the identifier packet may be an LLDP packet, and the LLDP packet carries configuration information of the first SDN controller 3101, such as, information about the first SDN controller 3101 such as a main capability, a management address, a device identifier, and an interface identifier.

S3202: SW2 receives the first indication message, and sends, by using the egress port P1, the identifier packet encapsulated in the first indication message to an ingress port P2 of SW3 that has a communicating link with the egress port P 1.

S3203: SW3 receives the identifier packet by using the ingress port P2, and encapsulates the identifier packet in a first inquiry message, where the first inquiry message is used for inquiring of a second SDN controller 3102 administrating SW3 about port information of a port forwarding the identifier packet, and the first inquiry message carries port information of the ingress port P2.

In this step, the first inquiry message may be a Packet-in message in the Openflow protocol.

S3204: The second SDN controller 3102 receives the first inquiry message sent by SW3, parses the first inquiry message, and determines that the identifier packet encapsulated in the first inquiry message does not carry an identifier of the second SDN controller 3102.

S3205: Encapsulate the identifier packet and the port information of the ingress port in an encapsulation message, encapsulate the encapsulation message in a second indication message, and send the second indication message to SW3, where the second indication message is used for instructing SW3 to send, by using the ingress port P2, the encapsulation message encapsulated in the second indication message.

In this step, the second indication message may be a Packet-out message in the Openflow protocol.

S3206: SW3 receives the second indication message, and sends, by using the ingress port P2, the encapsulation message encapsulated in the second indication message to the egress port P1 of SW2 that has a communicating link with the ingress port P2.

S3207: SW2 receives the encapsulation message by using the egress port P1, and encapsulates the encapsulation message in a second inquiry message, where the second inquiry message is used for inquiring of the first SDN controller 3101 administrating SW2 about port information of a port forwarding the encapsulation message.

In this step, the second inquiry message may further carry port information of the egress port P1 receiving the encapsulation message.

In this step, the second inquiry message may be a Packet-in message in the Openflow protocol.

S3208: The first SDN controller 3101 receives the second inquiry message, parses the encapsulation message encapsulated in the second inquiry message, then determines that the identifier packet carried in the encapsulation message encapsulated in the second inquiry message carries the identifier of the first SDN controller 3101, determines the first indication message having a correspondence with the identifier packet according to the identifier packet encapsulated in the encapsulation message, and determines that a cross-SDN-domain link exists between the egress port designated in the first indication message and the ingress port indicated in the encapsulation message.

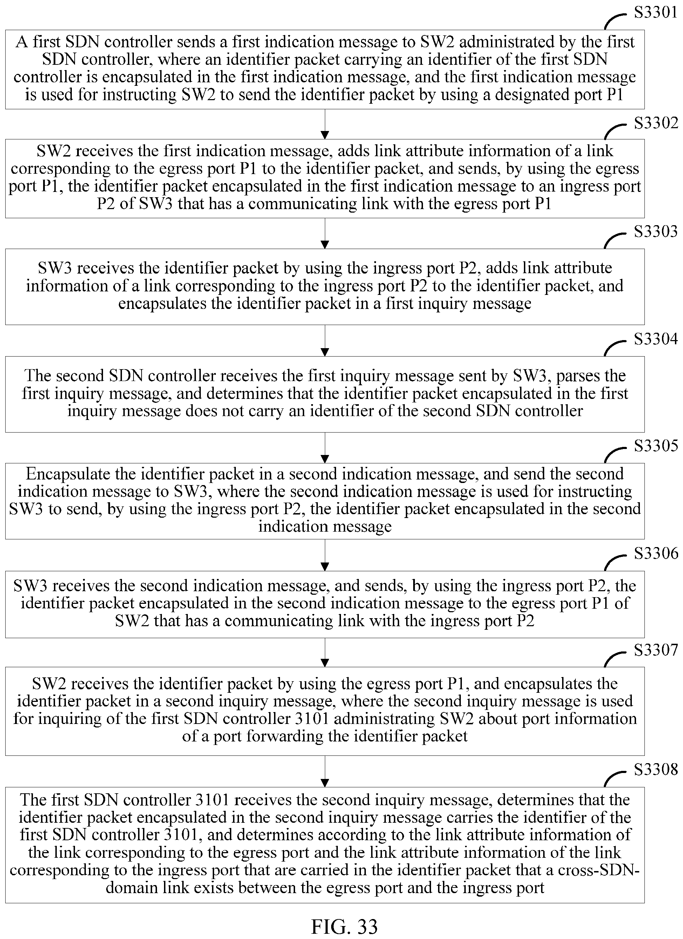

Example 6: FIG. 31 continues to be used as an example, and specific steps are shown in FIG. 33, and include:
S3301: A first SDN controller 3101 sends a first indication message to SW2 administrated by the first SDN controller 3101, where an identifier packet carrying an identifier of the first SDN controller 3101 is encapsulated in the first indication message, and the first indication message is used for instructing SW2 to send the identifier packet by using a designated port P 1.

S3302: SW2 receives the first indication message, adds link attribute information of a link corresponding to the egress port P1 to the identifier packet, and sends, by using the egress port P1, the identifier packet encapsulated in the first indication message to an ingress port P2 of SW3 that has a communicating link with the egress port P 1.

S3303: SW3 receives the identifier packet by using the ingress port P2, adds link attribute information of a link corresponding to the ingress port P2 to the identifier packet, and encapsulates the identifier packet in a first inquiry message, where the first inquiry message is used for inquiring of a second SDN controller 3102 administrating SW3 about port information of a port forwarding the identifier packet.

S3304: The second SDN controller 3102 receives the first inquiry message sent by SW3, parses the first inquiry message, and determines that the identifier packet encapsulated in the first inquiry message does not carry an identifier of the second SDN controller 3102.

S3305: Encapsulate the identifier packet in a second indication message, and send the second indication message to SW3, where the second indication message is used for instructing SW3 to send, by using the ingress port P2, the identifier packet encapsulated in the second indication message.

S3306: SW3 receives the second indication message, and sends, by using the ingress port P2, the identifier packet encapsulated in the second indication message to the egress port P1 of SW2 that has a communicating link with the ingress port P2.

S3307: SW2 receives the identifier packet by using the egress port P1, and encapsulates the identifier packet in a second inquiry message, where the second inquiry message is used for inquiring of the first SDN controller 3101 administrating SW2 about port information of a port forwarding the identifier packet.

In this step, the second inquiry message may further carry port information of the egress port P1 receiving the identifier packet.

S3308: The first SDN controller 3101 receives the second inquiry message, parses the identifier packet encapsulated in the second inquiry message, then determines that the identifier packet encapsulated in the second inquiry message carries the identifier of the first SDN controller 3101, and determines according to the link attribute information of the link corresponding to the egress port and the link attribute information of the link corresponding to the ingress port that are carried in the identifier packet that a cross-SDN-domain link exists between the egress port and the ingress port.

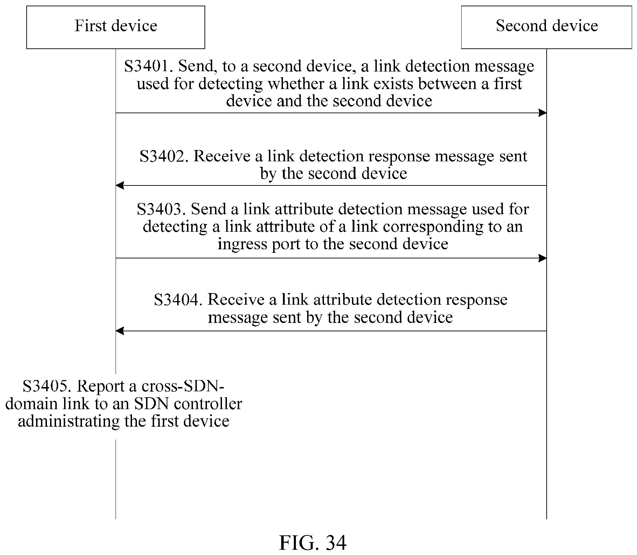

FIG. 34 shows a link discovery method provided in an embodiment of the present invention, and as shown in FIG. 34, the method specifically includes the following steps:
S3401: A first device sends, to a second device, a link detection message used for detecting whether a link exists between the first device and the second device.

In this step, the link detection message may also carry port information of an egress port through which the device sends the link detection message, and a domain identifier of an SDN domain to which the first device belongs, so as to help the second device discover a device that has a link with the second device.

Further, in this step, the link detection message may be a test message in a Link Management Protocol (LMP). S3402: Receive a link detection response message sent by the second device, where the link detection response message carries information about a domain identifier of an SDN domain to which the second device belongs. Further, in this step, when detection is successful, the link detection response message may be a TestStatusSuccess message of the LMP protocol.

S3403: When a domain identifier of an SDN domain to which the first device belongs is different from the domain identifier of the SDN domain to which the second device belongs, send a link attribute detection message used for detecting a link attribute of a link corresponding to an ingress port to the second device.

Further, in this step, the SDN domains to which the first device and the second device belong are different, and therefore, a link attribute of a link corresponding to an egress port and the link attribute of the link corresponding to the ingress port may be different, and after it is detected that the egress port and the ingress port can communicate with each other, a link that exists between the egress port and the ingress port and through which the egress port and the ingress port can normally communicate needs to be further determined; therefore, consistency verification needs to be performed between the egress port and the ingress port.

Further, in this step, the link attribute detection message may be a LinkSummary packet in the LMP protocol. S3404: Receive a link attribute detection response message sent by the second device, where the link attribute detection response message carries the link attribute of the link corresponding to the ingress port.

Further, if consistency verification is successful, the link attribute detection response message may be a LinkSummaryAck packet in the LMP protocol.

S3405: Report a cross-SDN-domain link to an SDN controller administrating the first device.

Further, if the SDN controller has a parent SDN controller, and the parent SDN controller manages a cross-SDN-domain link between SDN sub-domains administrated by the parent SDN controller, the SDN controller reports the cross-SDN-domain link to the parent SDN controller after this step.

Based on a same inventive idea, embodiments of the present invention further provide an SDN controller and a device, and because a principle through which the SDN controller and the device resolve a problem is similar to that of the foregoing link discovery method, reference may be made to implementation of the foregoing method for implementation of the SDN controller and the device, and repetitive content is not described herein again.

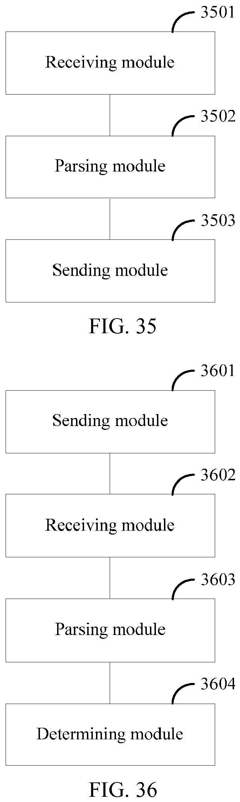

An SDN controller provided in an embodiment of the present invention is shown in FIG. 35, and includes the following modules:
a receiving module 3501, configured to receive an inquiry message sent by a first device administrated by the SDN controller, where the inquiry message is used for inquiring about port information of a port forwarding an identifier packet received by the first device, and the identifier packet carrying an identifier of another SDN controller is encapsulated in the inquiry message;
a parsing module 3502, configured to parse the identifier packet that is received by the receiving module 3501 and encapsulated in the inquiry message; and
a sending module 3503, configured to: when it is determined according to a parsing result of the parsing module 3502 that the identifier packet does not carry an identifier of the SDN controller, send, to a link in communication with the SDN controller, an encapsulation message that is determined according to the inquiry message and in which the identifier packet is encapsulated, where the encapsulation message is used for: when the another SDN controller receives the encapsulation message, determining according to the identifier packet encapsulated in the encapsulation message that a cross-SDN-domain link exists between a second device sending the identifier packet to the first device and the first device.

Further, when the another SDN controller is a parent SDN controller of the SDN controller, the sending module 3503 is specifically configured to forward the inquiry message to the parent SDN controller of the SDN controller.

Further, the sending module 3503 is specifically configured to forward the inquiry message to all neighboring SDN controllers of the SDN controller, where a neighboring SDN controller of the SDN controller is an SDN controller that has a communicating physical link with the SDN controller, or an SDN controller that has a communications mechanism with the SDN controller, or an SDN controller configured for the SDN controller; or
the sending module 3503 is specifically configured to: when the identifier packet carries a domain identifier of an SDN domain administrated by the another SDN controller, forward the inquiry message to the another SDN controller according to the domain identifier of the SDN domain administrated by the another SDN controller that is carried in the identifier packet and obtained by parsing.

Further, the sending module 3503 is specifically configured to send an indication message in which the encapsulation message is encapsulated to the first device, where the indication message is used for instructing the device to forward the encapsulation message.

Further, the identifier packet that is received by the receiving module 3501 and encapsulated in the inquiry message is received by the first device by using an ingress port, and the inquiry message further carries port information of the ingress port; and the indication message sent by the sending module 3503 is specifically used for instructing the device to forward the encapsulation message by using the ingress port; and
the sending module 3503 is further configured to: before the indication message in which the encapsulation message is encapsulated is sent to the first device, encapsulate the identifier packet and the port information of the ingress port in the encapsulation message.

Further, the identifier packet encapsulated in the inquiry message received by the receiving module 3501 is the identifier packet that is received by the first device by using an ingress port and carries link attribute information of a link corresponding to an egress port of the second device; the identifier packet encapsulated in the inquiry message sent by the first device to the first SDN controller further carries link attribute information of a link corresponding to the ingress port; and the indication message sent by the sending module 3503 is specifically used for instructing the first device to forward the encapsulation message by using the ingress port; and
the sending module 3503 is further configured to: before the indication message in which the encapsulation message is encapsulated is sent to the first device, encapsulate the identifier packet carrying the link attribute information of the link corresponding to the ingress port in an encapsulation message, or use the identifier packet carrying the link attribute information of the link corresponding to the ingress port as an encapsulation message.

A parent SDN controller provided in an embodiment of the present invention is shown in FIG. 36, and includes the following modules:
a sending module 3601, configured to send an indication message in which an identifier packet carrying an identifier of the parent SDN controller is encapsulated to a first software defined networking (SDN) sub-controller, where the indication message is used for instructing the first SDN sub-controller to forward the identifier packet by using a designated device administrated by the first SDN sub-controller;
a receiving module 3602, configured to receive an inquiry message forwarded by a second SDN sub-controller, where the inquiry message is an inquiry message that is used for inquiring of the second SDN sub-controller about port information of a port forwarding the identifier packet and in which the identifier packet is encapsulated by a device administrated by the second SDN sub-controller after the device receives the identifier packet sent by the designated device;
a parsing module 3603, configured to parse the identifier packet that is received by the receiving module 3602 and encapsulated in the inquiry message; and
a determining module 3604, configured to: when it is determined according to a parsing result of the parsing module 3603 that the identifier packet carries an identifier of the parent SDN controller, determine according to the identifier packet that a cross-SDN-domain link exists between the designated device receiving the indication message sent by the sending module 3601 and the device that is administrated by the second SDN sub-controller.

Further, the indication message sent by the sending module 3601 is specifically used for instructing the designated device to send the identifier packet by using a designated egress port, and the identifier packet has a correspondence with the indication message;
the inquiry message received by the receiving module 3602 is specifically an inquiry message that carries port information of an ingress port, in which the identifier packet is encapsulated by the device administrated by the second SDN sub-controller after the device administrated by the second SDN sub-controller receives, by using the ingress port, the identifier packet sent by the designated device by using the egress port, and that is used for inquiring of the second SDN sub-controller about the port information of the port forwarding the identifier packet; and
the determining module 3604 is specifically configured to determine an indication message that has a correspondence with the identifier packet according to the identifier packet; and determine that a cross-SDN-domain link exists between the egress port designated in the indication message and the ingress port indicated in the inquiry message.

Further, the indication message sent by the sending module 3601 is specifically used for instructing the designated device to send the identifier packet by using a designated egress port; and the identifier packet sent by the designated device by using the egress port carries link attribute information of a link corresponding to the egress port;
the identifier packet encapsulated in the inquiry message sent by the device administrated by the second SDN sub-controller to the second SDN sub-controller further carries link attribute information of a link corresponding to the ingress port; and
the determining module 3604 is specifically configured to determine according to the link attribute information of the link corresponding to the egress port and the link attribute information of the link corresponding to the ingress port that are carried in the identifier packet that a cross-SDN-domain link exists between the egress port and the ingress port.

Further, the receiving module 3602 is further configured to: before the parent SDN controller sends the indication message to the first SDN sub-controller, receive port information reported by the first SDN sub-controller, where a port represented by the port information is a port that is determined from ports of devices administrated by the first SDN sub-controller and does not form any link with any one of the ports; and
the determining module 3604 is further configured to determine that a reported port is the designated egress port according to the port information received by the receiving module 3602, and determine that a device to which the reported port belongs is the designated device.

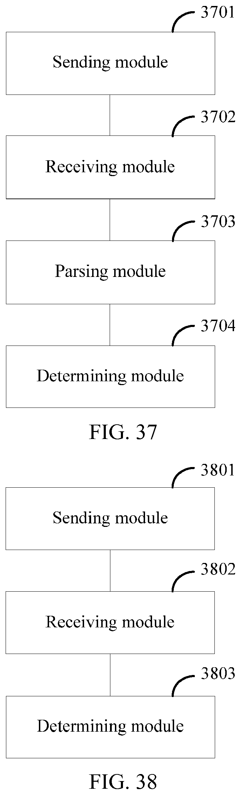

An SDN controller provided in an embodiment of the present invention is shown in FIG. 37, and includes the following modules:
a sending module 3701, configured to send an indication message in which an identifier packet carrying an identifier of the SDN controller is encapsulated to a designated device administrated by the first SDN controller, where the indication message is used for instructing the designated device to forward the identifier packet;
a receiving module 3702, configured to receive an encapsulation message in which the identifier packet is encapsulated, where the encapsulation message is determined according to a first inquiry message in which the identifier packet is encapsulated by a device administrated by another SDN controller after the device receives the identifier packet sent by the designated device and that is used for inquiring of the another SDN controller about port information of a port forwarding the identifier packet;
a parsing module 3703, configured to parse the identifier packet that is received by the receiving module 3702 and encapsulated in the encapsulation message; and
a determining module 3704, configured to: when the parsing module 3703 determines that the identifier packet carries an identifier of the SDN controller, determine according to the identifier packet that a cross-SDN-domain link exists between the designated device receiving the indication message sent by the sending module 3701 and the device that is administrated by the another SDN controller.

Further, the another SDN controller is a neighboring SDN controller of the SDN controller, where a neighboring SDN controller of the SDN controller is an SDN controller that has a communicating physical link with the SDN controller, or an SDN controller that has a communications mechanism with the SDN controller, or an SDN controller configured for the SDN controller; and
the receiving module 3702 is specifically configured to receive an encapsulation message forwarded by the second SDN controller, where the encapsulation message is the first inquiry message in which the identifier packet is encapsulated by the device administrated by the another SDN controller after the device receives the identifier packet sent by the designated device and that is used for inquiring of the another SDN controller about the port information of the port forwarding the identifier packet.

Further, the indication message sent by the sending module 3701 is specifically used for instructing the designated device to send the identifier packet by using a designated egress port, and the identifier packet has a correspondence with the indication message;
the encapsulation message received by the receiving module 3702 is specifically the first inquiry message that carries port information of an ingress port, in which the identifier packet is encapsulated by the device administrated by the another SDN controller after the device administrated by the another SDN controller receives, by using the ingress port, the identifier packet sent by the designated device by using the egress port, and that is used for inquiring of the another SDN controller about the port information of the port forwarding the identifier packet; and
the determining module 3704 is specifically configured to determine an indication message that has a correspondence with the identifier packet according to the identifier packet; and determine that a cross-SDN-domain link exists between the egress port designated in the indication message and the ingress port indicated in the encapsulation message.

Further, the receiving module 3702 is specifically configured to receive a second inquiry message that is sent by the designated device and in which the encapsulation message is encapsulated, where the second inquiry message is used for inquiring about port information of a port forwarding the encapsulation message, and the encapsulation message is an encapsulation message that carries the identifier packet and is encapsulated by the another SDN controller according to the first inquiry message after a device administrated by the another SDN controller, after receiving the identifier packet sent by the designated device, encapsulates the identifier packet in the first inquiry message used for inquiring of the another SDN controller about the port information of the port forwarding the identifier packet.

Further, the indication message sent by the sending module 3701 is specifically used for instructing the designated device to send the identifier packet by using a designated egress port, and the identifier packet has a correspondence with the indication message;
the encapsulation message received by the receiving module 3702 is specifically an encapsulation message that carries the identifier packet and port information of an ingress port and is encapsulated by the another SDN controller according to the first inquiry message after the device administrated by the another SDN controller, after receiving, using an ingress port, the identifier packet sent by the designated device by using the egress port, encapsulates the identifier packet in the first inquiry message that carries the port information of the ingress port and is used for inquiring of the another SDN controller about the port information of the port forwarding the identifier packet; and
the determining module 3704 is specifically configured to determine an indication message that has a correspondence with the identifier packet according to the identifier packet; and determine that a cross-SDN-domain link exists between the egress port designated in the indication message and the ingress port indicated in the encapsulation message encapsulated in the second inquiry message.

Further, the indication message sent by the sending module 3701 is specifically used for instructing the designated device to send the identifier packet by using a designated egress port; and the identifier packet sent by the designated device by using the egress port carries link attribute information of a link corresponding to the egress port;
the identifier packet encapsulated in the first inquiry message sent by the device administrated by the another SDN controller to the another SDN controller further carries link attribute information of a link corresponding to the ingress port; and
the determining module 3704 is specifically configured to determine according to the link attribute information of the link corresponding to the egress port and the link attribute information of the link corresponding to the ingress port that are carried in the identifier packet that a cross-SDN-domain link exists between the egress port and the ingress port.

A device provided in an embodiment of the present invention is shown in FIG. 38, and includes the following modules:
a sending module 3801, configured to send, to another device, a link detection message used for detecting whether a link exists between the device and the another device;
a receiving module 3802, configured to receive a link detection response message sent by the another device after receiving the link detection message sent by the sending module 3801, where the link detection response message carries information about a domain identifier of an SDN domain to which the another device belongs; and
a determining module 3803, configured to: when a domain identifier of an SDN domain to which the device belongs is different from the domain identifier of the SDN domain to which the another device belongs, determine that a cross-SDN-domain link exists between the device and the another device.

Further, the link detection response message received by the receiving module 3802 further carries port information of an ingress port through which the another device receives the link detection message; and
the determining module 3803 is specifically configured to determine that a cross-domain link exists between an egress port through which the device sends the link detection message and the ingress port.

Further, the sending module 3801 is further configured to: after the determining module 3803 determines that the cross-domain link exists between the egress port through which the device sends the link detection message and the ingress port, send a link attribute detection message used for detecting a link attribute of a link corresponding to the ingress port to the another device; and
the receiving module 3802 is further configured to: after the sending module 3801 sends the link attribute detection message, receive a link attribute detection response message sent by the another device, where the link attribute detection response message carries the link attribute of the link corresponding to the ingress port.

Further, the sending module 3801 is further configured to: after the determining module 3803 determines that a cross-SDN-domain link exists between the device and the another device, report information about the cross-SDN-domain link to an SDN controller administrating the device.

Further, the SDN controller shown in FIG. 35 may be used as a non-initiator discovering a cross-SDN-domain link, the parent SDN controller shown in FIG. 36 may be used as an initiator discovering a cross-SDN-domain link, the SDN controller shown in FIG. 37 may be used as an initiator discovering a cross-SDN-domain link, and the device shown in FIG. 38 may be used as an initiator discovering a cross-SDN-domain link. During discovery of a cross-SDN-domain link, multiple SDN controllers and devices need to cooperate with each other, and therefore, an SDN controller provided in an embodiment of the present invention may further form a system for discovering a cross-SDN-domain link, where the system may include the SDN controller shown in FIG. 35 and the parent SDN controller shown in FIG. 36, or the system may include the SDN controller shown in FIG. 35 and the SDN controller shown in FIG. 37, or the system may include multiple devices as that shown in FIG. 38.

Functions of the foregoing units may correspond to corresponding processing steps in processes shown in FIG. 2 to FIG. 10, FIG. 12, FIG. 14 to FIG. 21, FIG. 23 to FIG. 30, and FIG. 32 to FIG. 34, and details are not described herein again.

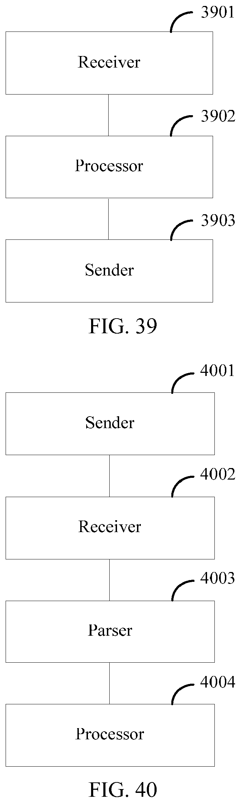

An SDN controller provided in an embodiment of the present invention is shown in FIG. 39, and includes the following parts:
a receiver 3901, configured to receive an inquiry message sent by a first device administrated by the SDN controller, where the inquiry message is used for inquiring about port information of a port forwarding an identifier packet received by the first device, and the identifier packet carrying an identifier of another SDN controller is encapsulated in the inquiry message;
a processor 3902, configured to parse the identifier packet that is received by the receiver 3901 and encapsulated in the inquiry message; and
a sender 3903, configured to: when it is determined according to a parsing result of the processor 3902 that the identifier packet does not carry an identifier of the SDN controller, send, to a link in communication with the SDN controller, an encapsulation message that is determined according to the inquiry message and in which the identifier packet is encapsulated, where the encapsulation message is used for: when the another SDN controller receives the encapsulation message, determining according to the identifier packet encapsulated in the encapsulation message that a cross-SDN-domain link exists between a second device sending the identifier packet to the first device and the first device.

Further, when the another SDN controller is a parent SDN controller of the SDN controller, the sender 3903 is specifically configured to forward the inquiry message to the parent SDN controller of the SDN controller.

Further, the sender 3903 is specifically configured to forward the inquiry message to all neighboring SDN controllers of the SDN controller, where a neighboring SDN controller of the SDN controller is an SDN controller that has a communicating physical link with the SDN controller, or an SDN controller that has a communications mechanism with the SDN controller, or an SDN controller configured for the SDN controller; or
the sender 3903 is specifically configured to: when the identifier packet carries a domain identifier of an SDN domain administrated by the another SDN controller, forward the inquiry message to the another SDN controller according to the domain identifier of the SDN domain administrated by the another SDN controller that is carried in the identifier packet and obtained by parsing.

Further, the sender 3903 is specifically configured to send an indication message in which the encapsulation message is encapsulated to the first device, where the indication message is used for instructing the device to forward the encapsulation message.

Further, the identifier packet that is received by the receiver 3901 and encapsulated in the inquiry message is received by the first device by using an ingress port, and the inquiry message further carries port information of the ingress port; and the indication message sent by the sender 3903 is specifically used for instructing the device to forward the encapsulation message by using the ingress port; and
the sender 3903 is further configured to: before the indication message in which the encapsulation message is encapsulated is sent to the first device, encapsulate the identifier packet and the port information of the ingress port in the encapsulation message.

Further, the identifier packet encapsulated in the inquiry message received by the receiver 3901 is the identifier packet that is received by the first device by using an ingress port and carries link attribute information of a link corresponding to an egress port of the second device; the identifier packet encapsulated in the inquiry message sent by the first device to the first SDN controller further carries link attribute information of a link corresponding to the ingress port; and the indication message sent by the sender 3903 is specifically used for instructing the first device to forward the encapsulation message by using the ingress port; and
the sender 3903 is further configured to: before the indication message in which the encapsulation message is encapsulated is sent to the first device, encapsulate the identifier packet carrying the link attribute information of the link corresponding to the ingress port in an encapsulation message, or use the identifier packet carrying the link attribute information of the link corresponding to the ingress port as an encapsulation message.

A parent SDN controller provided in an embodiment of the present invention is shown in FIG. 40, and includes the following parts:
a sender 4001, configured to send an indication message in which an identifier packet carrying an identifier of the parent SDN controller is encapsulated to a first software defined networking (SDN) sub-controller, where the indication message is used for instructing the first SDN sub-controller to forward the identifier packet by using a designated device administrated by the first SDN sub-controller;
a receiver 4002, configured to receive an inquiry message forwarded by a second SDN sub-controller, where the inquiry message is an inquiry message that is used for inquiring of the second SDN sub-controller about port information of a port forwarding the identifier packet and in which the identifier packet is encapsulated by a device administrated by the second SDN sub-controller after the device receives the identifier packet sent by the designated device;
a parser 4003, configured to parse the identifier packet that is received by the receiver 4002 and encapsulated in the inquiry message; and
a processor 4004, configured to: when it is determined according to a parsing result of the parser 4003 that the identifier packet carries an identifier of the parent SDN controller, determine according to the identifier packet that a cross-SDN-domain link exists between the designated device receiving the indication message sent by the sender 4001 and the device that is administrated by the second SDN sub-controller.

Further, the indication message sent by the sender 4001 is specifically used for instructing the designated device to send the identifier packet by using a designated egress port, and the identifier packet has a correspondence with the indication message;
the inquiry message received by the receiver 4002 is specifically an inquiry message that carries port information of an ingress port, in which the identifier packet is encapsulated by the device administrated by the second SDN sub-controller after the device administrated by the second SDN sub-controller receives, by using the ingress port, the identifier packet sent by the designated device by using the egress port, and that is used for inquiring of the second SDN sub-controller about the port information of the port forwarding the identifier packet; and
the processor 4004 is specifically configured to determine an indication message that has a correspondence with the identifier packet according to the identifier packet; and determine that a cross-SDN-domain link exists between the egress port designated in the indication message and the ingress port indicated in the inquiry message.

Further, the indication message sent by the sender 4001 is specifically used for instructing the designated device to send the identifier packet by using a designated egress port; and the identifier packet sent by the designated device by using the egress port carries link attribute information of a link corresponding to the egress port;
the identifier packet encapsulated in the inquiry message sent by the device administrated by the second SDN sub-controller to the second SDN sub-controller further carries link attribute information of a link corresponding to the ingress port; and
the processor 4004 is specifically configured to determine according to the link attribute information of the link corresponding to the egress port and the link attribute information of the link corresponding to the ingress port that are carried in the identifier packet that a cross-SDN-domain link exists between the egress port and the ingress port.

Further, the receiver 4002 is further configured to: before the parent SDN controller sends the indication message to the first SDN sub-controller, receive port information reported by the first SDN sub-controller, where a port represented by the port information is a port that is determined from ports of devices administrated by the first SDN sub-controller and does not form any link with any one of the ports; and
the processor 4004 is further configured to determine that a reported port is the designated egress port according to the port information received by the receiver 4002, and determine that a device to which the reported port belongs is the designated device.

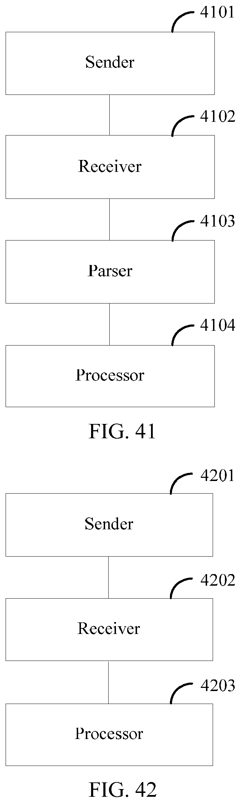

An SDN controller provided in an embodiment of the present invention is shown in FIG. 41, and includes the following parts:
a sender 4101, configured to send an indication message in which an identifier packet carrying an identifier of the SDN controller is encapsulated to a designated device administrated by the first SDN controller, where the indication message is used for instructing the designated device to forward the identifier packet;
a receiver 4102, configured to receive an encapsulation message in which the identifier packet is encapsulated, where the encapsulation message is determined according to a first inquiry message in which the identifier packet is encapsulated by a device administrated by another SDN controller after the device receives the identifier packet sent by the designated device and that is used for inquiring of the another SDN controller about port information of a port forwarding the identifier packet;
a parser 4103, configured to parse the identifier packet that is received by the receiver 4102 and encapsulated in the encapsulation message; and
a processor 4104, configured to: when the parser 4103 determines that the identifier packet carries an identifier of the SDN controller, determine according to the identifier packet that a cross-SDN-domain link exists between the designated device receiving the indication message sent by the sender 4101 and the device that is administrated by the another SDN controller.

Further, the another SDN controller is a neighboring SDN controller of the SDN controller, where a neighboring SDN controller of the SDN controller is an SDN controller that has a communicating physical link with the SDN controller, or an SDN controller that has a communications mechanism with the SDN controller, or an SDN controller configured for the SDN controller; and
the receiver 4102 is specifically configured to receive an encapsulation message forwarded by the second SDN controller, where the encapsulation message is the first inquiry message in which the identifier packet is encapsulated by the device administrated by the another SDN controller after the device receives the identifier packet sent by the designated device and that is used for inquiring of the another SDN controller about the port information of the port forwarding the identifier packet.

Further, the indication message sent by the sender 4101 is specifically used for instructing the designated device to send the identifier packet by using a designated egress port, and the identifier packet has a correspondence with the indication message;
the encapsulation message received by the receiver 4102 is specifically the first inquiry message that carries port information of an ingress port, in which the identifier packet is encapsulated by the device administrated by the another SDN controller after the device administrated by the another SDN controller receives, by using the ingress port, the identifier packet sent by the designated device by using the egress port, and that is used for inquiring of the another SDN controller about the port information of the port forwarding the identifier packet; and
the processor 4104 is specifically configured to determine an indication message that has a correspondence with the identifier packet according to the identifier packet; and determine that a cross-SDN-domain link exists between the egress port designated in the indication message and the ingress port indicated in the encapsulation message.

Further, the receiver 4102 is specifically configured to receive a second inquiry message that is sent by the designated device and in which the encapsulation message is encapsulated, where the second inquiry message is used for inquiring about port information of a port forwarding the encapsulation message, and the encapsulation message is an encapsulation message that carries the identifier packet and is encapsulated by the another SDN controller according to the first inquiry message after a device administrated by the another SDN controller, after receiving the identifier packet sent by the designated device, encapsulates the identifier packet in the first inquiry message used for inquiring of the another SDN controller about the port information of the port forwarding the identifier packet.

Further, the indication message sent by the sender 4101 is specifically used for instructing the designated device to send the identifier packet by using a designated egress port, and the identifier packet has a correspondence with the indication message;
the encapsulation message received by the receiver 4102 is specifically an encapsulation message that carries the identifier packet and port information of an ingress port and is encapsulated by the another SDN controller according to the first inquiry message after the device administrated by the another SDN controller, after receiving, using an ingress port, the identifier packet sent by the designated device by using the egress port, encapsulates the identifier packet in the first inquiry message that carries the port information of the ingress port and is used for inquiring of the another SDN controller about the port information of the port forwarding the identifier packet; and
the processor 4104 is specifically configured to determine an indication message that has a correspondence with the identifier packet according to the identifier packet; and determine that a cross-SDN-domain link exists between the egress port designated in the indication message and the ingress port indicated in the encapsulation message encapsulated in the second inquiry message.

Further, the indication message sent by the sender 4101 is specifically used for instructing the designated device to send the identifier packet by using a designated egress port; and the identifier packet sent by the designated device by using the egress port carries link attribute information of a link corresponding to the egress port;
the identifier packet encapsulated in the first inquiry message sent by the device administrated by the another SDN controller to the another SDN controller further carries link attribute information of a link corresponding to the ingress port; and
the processor 4104 is specifically configured to determine according to the link attribute information of the link corresponding to the egress port and the link attribute information of the link corresponding to the ingress port that are carried in the identifier packet that a cross-SDN-domain link exists between the egress port and the ingress port.

A device provided in an embodiment of the present invention is shown in FIG. 42, and includes the following parts:
a sender 4201, configured to send, to another device, a link detection message used for detecting whether a link exists between the device and the another device;
a receiver 4202, configured to receive a link detection response message sent by the another device after receiving the link detection message sent by the sender 4201, where the link detection response message carries information about a domain identifier of an SDN domain to which the another device belongs; and
a processor 4203, configured to: when a domain identifier of an SDN domain to which the device belongs is different from the domain identifier of the SDN domain to which the another device belongs, determine that a cross-SDN-domain link exists between the device and the another device.

Further, the link detection response message received by the receiver 4202 further carries port information of an ingress port through which the another device receives the link detection message; and
the processor 4203 is specifically configured to determine that a cross-domain link exists between an egress port through which the device sends the link detection message and the ingress port. Further, the sender 4201 is further configured to: after the processor 4203 determines that the cross-domain link exists between the egress port through which the device sends the link detection message and the ingress port, send a link attribute detection message used for detecting a link attribute of a link corresponding to the ingress port to the another device; and
the receiver 4202 is further configured to: after the sender 4201 sends the link attribute detection message, receive a link attribute detection response message sent by the another device, where the link attribute detection response message carries the link attribute of the link corresponding to the ingress port. Further, the sender 4201 is further configured to: after the processor 4203 determines that a cross-SDN-domain link exists between the device and the another device, report information about the cross-SDN-domain link to an SDN controller administrating the device.

Further, the SDN controller shown in FIG. 39 may be used as a non-initiator discovering a cross-SDN-domain link, the parent SDN controller shown in FIG. 40 may be used as an initiator discovering a cross-SDN-domain link, the SDN controller shown in FIG. 41 may be used as an initiator discovering a cross-SDN-domain link, and the device shown in FIG. 42 may be used as an initiator discovering a cross-SDN-domain link. During discovery of a cross-SDN-domain link, multiple SDN controllers and devices need to cooperate with each other, and therefore, an SDN controller provided in an embodiment of the present invention may further form a system for discovering a cross-SDN-domain link, where the system may include the SDN controller shown in FIG. 39 and the parent SDN controller shown in FIG. 40, or the system may include the SDN controller shown in FIG. 39 and the SDN controller shown in FIG. 41, or the system may include multiple devices as that shown in FIG. 42.

Functions of the foregoing units may correspond to corresponding processing steps in processes shown in FIG. 2 to FIG. 10, FIG. 12, FIG. 14 to FIG. 21, FIG. 23 to FIG. 30, and FIG. 32 to FIG. 34, and details are not described herein again.

According to a link discovery method, an SDN controller and a device provided in the embodiments of the present invention, a parent SDN controller sends an indication message in which an identifier packet carrying an identifier of the parent SDN controller is encapsulated to a first SDN sub-controller, where the indication message is used for instructing the first SDN sub-controller to forward the identifier packet by using a designated device administrated by the first SDN sub-controller; after receiving the identifier packet sent by the designated device, a device administrated by a second SDN sub-controller encapsulates the identifier packet in an inquiry message used for inquiring of the second SDN sub-controller about port information of a port forwarding the identifier packet, and sends the inquiry message to the second SDN sub-controller, and when performing parsing to find that the identifier packet does not carry an identifier of the second SDN sub-controller, the second SDN sub-controller forwards the inquiry message to the parent SDN controller; the parent SDN controller parses the identifier packet encapsulated in the inquiry message; and when it is determined that the identifier packet carries an identifier of the parent SDN controller, it is determined according to the identifier packet that a cross-SDN-domain link exists between the designated device and the device that is administrated by the second SDN sub-controller. The parent SDN controller detects a link between SDN sub-controllers administrated by the parent SDN controller, to discover a cross-SDN-domain link between SDN domains in which multiple SDN sub-controllers administrated by the parent SDN controller are located, so as to resolve a problem in the prior art that a cross-SDN-domain link cannot be discovered.

According to a link discovery method, an SDN controller and a device provided in the embodiments of the present invention, a first SDN controller sends an indication message in which an identifier packet carrying an identifier of the first SDN controller is encapsulated to a designated device administrated by the first SDN controller, where the indication message is used for instructing the designated device to forward the identifier packet; a second SDN controller receives a first inquiry message that is sent by a device administrated by the second SDN controller and is used for inquiring about port information of a port forwarding the identifier packet received by the device, parses the identifier packet, and when it is determined that the identifier packet does not carry an identifier of the second SDN controller, sends, to a link in communication with the second SDN controller, an encapsulation message that is determined according to the first inquiry message and in which the identifier packet is encapsulated; and after receiving the encapsulation message, the first SDN controller parses the identifier packet encapsulated in the encapsulation message, and when it is determined that the identifier packet carries an identifier of the first SDN controller, it is determined according to the identifier packet that a cross-SDN-domain link exists between the designated device and the device that is administrated by the second SDN controller. An SDN controller initiates detection on another SDN controller, thereby discovering a cross-SDN-domain link between the SDN controllers, so as to resolve a problem in the prior art that a cross-SDN-domain link cannot be discovered.

According to a link discovery method, an SDN controller and a device provided in the embodiments of the present invention, a first device sends, to a second device, a link detection message used for detecting whether a link exists between the first device and the second device; receives a link detection response message sent by the second device, where the link detection response message carries information about a domain identifier of an SDN domain to which the second device belongs; and when a domain identifier of an SDN domain to which the first device belongs is different from the domain identifier of the SDN domain to which the second device belongs, determines that a cross-SDN-domain link exists between the SDN domain to which the first device belongs and the SDN domain to which the second device belongs. A device administrated by an SDN controller initiates detection on a device belonging to another SDN domain, thereby determining that a link exists between SDN domains to which devices between which a link exists separately belong, so as to resolve a problem in the prior art that a cross-SDN-domain link cannot be discovered.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some exemplary embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention.

## Claims

1. A method, comprising:
receiving (S201), by a first software defined networking, SDN, controller, an inquiry message sent by a first device administrated by the first SDN controller, wherein the inquiry message is used for inquiring about port information of a port forwarding an identifier packet received by the first device, and the identifier packet carrying an identifier of a second SDN controller is encapsulated in the inquiry message;
parsing (S202), by the first SDN controller, the identifier packet; and
when it is determined that the identifier packet does not carry an identifier of the first SDN controller, sending (S203), by the first SDN controller, to a link in communication with the first SDN controller, an encapsulation message that is determined according to the inquiry message and in which the identifier packet is encapsulated, wherein
the encapsulation message is used for: when the second SDN controller receives the encapsulation message, determining, by the second SDN controller, according to the identifier packet encapsulated in the encapsulation message that a cross-SDN-domain link exists between a second device sending the identifier packet to the first device and the first device.

2. The method according to claim 1, wherein when the second SDN controller is a parent SDN controller of the first SDN controller, the sending, to a link in communication with the first SDN controller, an encapsulation message that is determined according to the inquiry message and in which the identifier packet is encapsulated specifically comprises:
forwarding the inquiry message to the parent SDN controller of the first SDN controller.

3. The method according to claim 1, wherein the identifier packet carries a domain identifier of an SDN domain administrated by the second SDN controller;
the sending, to a link in communication with the first SDN controller, an encapsulation message that is determined according to the inquiry message and in which the identifier packet is encapsulated specifically comprises:
forwarding the inquiry message to the second SDN controller according to the domain identifier of the SDN domain administrated by the second SDN controller that is carried in the identifier packet and obtained by parsing.

4. The method according to claim 2 or 3, wherein the identifier packet encapsulated in the inquiry message is received by the first device by using an ingress port, and the inquiry message further carries port information of the ingress port.

5. The method according to claim 2 or 3, wherein the identifier packet encapsulated in the inquiry message is the identifier packet that is received by the first device by using an ingress port and carries link attribute information of a link corresponding to an egress port of the second device; and
the identifier packet encapsulated in the inquiry message sent by the first device to the first SDN controller further carries link attribute information of a link corresponding to the ingress port.

6. A method, comprising:
sending (S301), by a parent software defined networking, SDN, controller, an indication message in which an identifier packet carrying an identifier of the parent SDN controller is encapsulated to a first SDN sub-controller, wherein the indication message is used for instructing the first SDN sub-controller to forward the identifier packet by using a designated device administrated by the first SDN sub-controller; receiving (S302), by the parent SDN controller, an inquiry message forwarded by a second SDN sub-controller, wherein the inquiry message is an inquiry message that is used for inquiring of the second SDN sub-controller about port information of a port forwarding the identifier packet and in which the identifier packet is encapsulated by a device administrated by the second SDN sub-controller after the device receives the identifier packet sent by the designated device; parsing (S303), by the parent SDN controller, the identifier packet encapsulated in the inquiry message; and
when it is determined that the identifier packet carries an identifier of the parent SDN controller, determining (S304), by the parent SDN controller, according to the identifier packet that a cross-SDN-domain link exists between the designated device and the device that is administrated by the second SDN sub-controller.

7. The method according to claim 6, wherein the indication message is specifically used for instructing the designated device to send the identifier packet by using a designated egress port, and the identifier packet has a correspondence with the indication message;
the inquiry message is specifically an inquiry message that carries port information of an ingress port, in which the identifier packet is encapsulated by the device administrated by the second SDN sub-controller after the device administrated by the second SDN sub-controller receives, by using the ingress port, the identifier packet sent by the designated device by using the egress port, and that is used for inquiring of the second SDN sub-controller about the port information of the port forwarding the identifier packet; and
the determining according to the identifier packet that a cross-SDN-domain link exists between the designated device and the device that is administrated by the second SDN sub-controller specifically comprises:
determining an indication message that has a correspondence with the identifier packet according to the identifier packet; and
determining that a cross-SDN-domain link exists between the egress port designated in the indication message and the ingress port indicated in the inquiry message.

8. The method according to claim 6, wherein the indication message is specifically used for instructing the designated device to send the identifier packet by using a designated egress port; and the identifier packet sent by the designated device by using the egress port carries link attribute information of a link corresponding to the egress port;
the identifier packet encapsulated in the inquiry message sent by the device administrated by the second SDN sub-controller to the second SDN sub-controller further carries link attribute information of a link corresponding to the ingress port; and
the determining according to the identifier packet that a cross-SDN-domain link exists between the designated device and the device that is administrated by the second SDN sub-controller specifically comprises:
determining according to the link attribute information of the link corresponding to the egress port and the link attribute information of the link corresponding to the ingress port that are carried in the identifier packet that a cross-SDN-domain link exists between the egress port and the ingress port.

9. The method according to claim 7 or 8, wherein before the sending, by a parent SDN controller, an indication message to a first SDN sub-controller, the method further comprises:
receiving, by the parent SDN controller, port information reported by the first SDN sub-controller, wherein a port represented by the port information is a port that is determined from ports of devices administrated by the first SDN sub-controller and does not form any link with any one of the ports; and
determining that a reported port is the designated egress port according to the port information received, and determining that a device to which the reported port belongs is the designated device.

10. A software defined networking, SDN, controller, comprising:
a receiving module (3501), configured to receive an inquiry message sent by a first device administrated by the SDN controller, wherein the inquiry message is used for inquiring about port information of a port forwarding an identifier packet received by the first device, and the identifier packet carrying an identifier of another SDN controller is encapsulated in the inquiry message;
a parsing module (3502), configured to parse the identifier packet that is received by the receiving module (3501) and encapsulated in the inquiry message; and
a sending module (3503), configured to: when it is determined according to a parsing result of the parsing module (3502) that the identifier packet does not carry an identifier of the SDN controller, send, to a link in communication with the SDN controller, an encapsulation message that is determined according to the inquiry message and in which the identifier packet is encapsulated, wherein the encapsulation message is used for: when the another SDN controller receives the encapsulation message, determining according to the identifier packet encapsulated in the encapsulation message that a cross-SDN-domain link exists between a second device sending the identifier packet to the first device and the first device.

11. The SDN controller according to claim 10, wherein when the another SDN controller is a parent SDN controller of the SDN controller, the sending module (3503) is specifically configured to forward the inquiry message to the parent SDN controller of the SDN controller.

12. The SDN controller according to claim 10, wherein
the sending module (3503) is specifically configured to: when the identifier packet carries a domain identifier of an SDN domain administrated by the another SDN controller, forward the inquiry message to the another SDN controller according to the domain identifier of the SDN domain administrated by the another SDN controller that is carried in the identifier packet and obtained by parsing.

13. The SDN controller according to claim 10, wherein the sending module (3503) is specifically configured to send an indication message in which the encapsulation message is encapsulated to the first device, wherein the indication message is used for instructing the device to forward the encapsulation message.

14. A parent software defined networking, SDN, controller, comprising:
a sending module (3601), configured to send an indication message in which an identifier packet carrying an identifier of the parent SDN controller is encapsulated to a first SDN sub-controller, wherein the indication message is used for instructing the first SDN sub-controller to forward the identifier packet by using a designated device administrated by the first SDN sub-controller;
a receiving module (3602), configured to receive an inquiry message forwarded by a second SDN sub-controller, wherein the inquiry message is an inquiry message that is used for inquiring of the second SDN sub-controller about port information of a port forwarding the identifier packet and in which the identifier packet is encapsulated by a device administrated by the second SDN sub-controller after the device receives the identifier packet sent by the designated device;
a parsing module (3603), configured to parse the identifier packet that is received by the receiving module (3602) and encapsulated in the inquiry message; and
a determining module (3604), configured to: when it is determined according to a parsing result of the parsing module (3603) that the identifier packet carries an identifier of the parent SDN controller, determine according to the identifier packet that a cross-SDN-domain link exists between the designated device receiving the indication message sent by the sending module (3601) and the device that is administrated by the second SDN sub-controller.

15. The parent SDN controller according to claim 14, wherein the indication message sent by the sending module (3601) is specifically used for instructing the designated device to send the identifier packet by using a designated egress port, and the identifier packet has a correspondence with the indication message;
the inquiry message received by the receiving module (3602) is specifically an inquiry message that carries port information of an ingress port, in which the identifier packet is encapsulated by the device administrated by the second SDN sub-controller after the device administrated by the second SDN sub-controller receives, by using the ingress port, the identifier packet sent by the designated device by using the egress port, and that is used for inquiring of the second SDN sub-controller about the port information of the port forwarding the identifier packet; and
the determining module (3604) is specifically configured to determine an indication message that has a correspondence with the identifier packet according to the identifier packet; and determine that a cross-SDN-domain link exists between the egress port designated in the indication message and the ingress port indicated in the inquiry message.

## Patentansprüche

1. Verfahren, umfassend:
Empfangen (S201), durch eine erste softwaredefinierte Vernetzungssteuerung bzw. SDN-Steuerung, einer Nachfragenachricht, die durch eine erste Einrichtung, die durch die erste SDN-Steuerung verwaltet wird, gesendet wird, wobei die Nachfragenachricht zum Abfragen nach Portinformationen eines Ports, der ein durch die erste Einrichtung empfangenes Kennungspaket weiterleitet, verwendet wird und das Kennungspaket, das eine Kennung einer zweiten SDN-Steuerung führt, in der Nachfragenachricht eingekapselt ist;
Analysieren (S202), durch die erste SDN-Steuerung, des Kennungspakets und wenn bestimmt wird, dass das Kennungspaket keine Kennung der ersten SDN-Steuerung führt, Senden (S203), durch die erste SDN-Steuerung, einer Einkapselungsnachricht, die gemäß der Nachfragenachricht bestimmt wird und in der das Kennungspaket eingekapselt ist, zu einer Verbindung in Kommunikation mit der ersten SDN-Steuerung, wobei
die Einkapselungsnachricht, wenn die zweite SDN-Steuerung die Einkapselungsnachricht empfängt, zum Bestimmen, durch die zweite SDN-Steuerung, gemäß dem Kennungspaket, das in der Einkapselungsnachricht eingekapselt ist, verwendet wird, dass eine SDN-bereichsübergreifende Verbindung zwischen einer zweiten Einrichtung, die das Kennungspaket zur ersten Einrichtung sendet, und der ersten Einrichtung besteht.

2. Verfahren nach Anspruch 1, wobei, wenn die zweite SDN-Steuerung eine SDN-Parent-Steuerung der ersten SDN-Steuerung ist, das Senden einer Einkapselungsnachricht, die gemäß der Nachfragenachricht bestimmt wird und in der das Kennungspaket eingekapselt ist, zu einer Verbindung in Kommunikation mit der ersten SDN-Steuerung spezifisch Folgendes umfasst:
Weiterleiten der Nachfragenachricht an die SDN-Parent-Steuerung der ersten SDN-Steuerung.

3. Verfahren nach Anspruch 1, wobei das Kennungspaket eine Bereichskennung eines SDN-Bereichs, der durch die zweite SDN-Steuerung verwaltet wird, führt;
das Senden einer Einkapselungsnachricht, die gemäß der Nachfragenachricht bestimmt wird und in der das Kennungspaket eingekapselt ist, zu einer Verbindung in Kommunikation mit der ersten SDN-Steuerung spezifisch Folgendes umfasst:
Weiterleiten der Nachfragenachricht an die zweite SDN-Steuerung gemäß der Bereichskennung des durch die zweite SDN-Steuerung verwalteten SDN-Bereichs, die im Kennungspaket geführt und durch Analysieren erhalten wird.

4. Verfahren nach Anspruch 2 oder 3, wobei das Kennungspaket, das in der Nachfragenachricht einkapselt ist, durch die erste Einrichtung unter Verwendung eines Eingangsports empfangen wird und die Nachfragenachricht ferner Portinformationen des Eingangsports führt.

5. Verfahren nach Anspruch 2 oder 3, wobei das Kennungspaket, das in der Nachfragenachricht einkapselt ist, das Kennungspaket ist, das durch die erste Einrichtung unter Verwendung eines Eingangsports empfangen wird und Verbindungsattributinformationen einer einem Ausgangsport der zweiten Einrichtung entsprechenden Verbindung führt; und
das Kennungspaket, das in der Nachfragenachricht, die durch die erste Einrichtung zur ersten SDN-Steuerung gesendet wird, einkapselt ist, ferner Verbindungsattributinformationen einer dem Eingangsport entsprechenden Verbindung führt.

6. Verfahren, umfassend:
Senden (S301), durch eine softwaredefinierte Parent-Vernetzungssteuerung bzw. SDN-Parent-Steuerung, einer Anzeigenachricht, in der ein Kennungspaket, das eine Kennung der SDN-Parent-Steuerung führt, eingekapselt ist, zu einer ersten SDN-Substeuerung, wobei die Anzeigenachricht zum Anweisen der ersten SDN-Substeuerung, das Kennungspaket unter Verwendung einer durch die erste SDN-Substeuerung verwalteten designierten Einrichtung weiterzuleiten, verwendet wird;
Empfangen (S302), durch die SDN-Parent-Steuerung, einer Nachfragenachricht, die durch eine zweite SDN-Substeuerung weitergeleitet wird, wobei die Nachfragenachricht eine Nachfragenachricht ist, die zum Abfragen der zweiten SDN-Substeuerung nach Portinformationen eines Ports, der das Kennungspaket weiterleitet, verwendet wird, und in der das Kennungspaket durch eine Einrichtung, die durch die zweite SDN-Substeuerung verwaltet wird, eingekapselt wird, nachdem die Einrichtung das Kennungspaket, das durch die designierte Einrichtung gesendet wird, empfängt;
Analysieren (S303), durch die SDN-Parent-Steuerung, des Kennungspakets, das in der Nachfragenachricht eingekapselt ist; und
wenn bestimmt wird, dass das Kennungspaket eine Kennung der SDN-Parent-Steuerung führt, Bestimmen (S304), durch die SDN-Parent-Steuerung gemäß dem Kennungspaket, dass eine SDN-bereichsübergreifende Verbindung zwischen der designierten Einrichtung und der Einrichtung, die durch die zweite SDN-Substeuerung verwaltet wird, besteht.

7. Verfahren nach Anspruch 6, wobei die Anzeigenachricht spezifisch zum Anweisen der designierten Einrichtung, das Kennungspaket unter Verwendung eines designierten Ausgangsports zu senden, verwendet wird und das Kennungspaket eine Korrespondenz mit der Anzeigenachricht aufweist;
die Nachfragenachricht spezifisch eine Nachfragenachricht ist, die Portinformationen eines Eingangsports führt und in der das Kennungspaket durch die Einrichtung, die durch die zweite SDN-Substeuerung verwaltet wird, eingekapselt wird, nachdem die Einrichtung, die durch die zweite SDN-Substeuerung verwaltet wird, das Kennungspaket, das durch die designierte Einrichtung unter Verwendung des Ausgangsports gesendet wird, unter Verwendung des Eingangsports empfangt, und die zum Abfragen der zweiten SDN-Substeuerung nach den Portinformationen des Ports, der das Kennungspaket weiterleitet, verwendet wird; und
das Bestimmen gemäß dem Kennungspaket, dass eine SDN-bereichsübergreifende Verbindung zwischen der designierten Einrichtung und der Einrichtung, die durch die zweite SDN-Substeuerung verwaltet wird, besteht, spezifisch Folgendes umfasst:
Bestimmen einer Anzeigenachricht, die eine Korrespondenz mit dem Kennungspaket aufweist, gemäß dem Kennungspaket; und
Bestimmen, dass eine SDN-bereichsübergreifende Verbindung zwischen dem Ausgangsport, der in der Anzeigenachricht designiert wird, und dem Eingangsport, der in der Nachfragenachricht angegeben wird, besteht.

8. Verfahren nach Anspruch 6, wobei die Anzeigenachricht spezifisch zum Anweisen der designierten Einrichtung, das Kennungspaket unter Verwendung eines designierten Ausgangsports zu senden, verwendet wird; und das Kennungspaket, das durch die designierte Einrichtung unter Verwendung des Ausgangsports gesendet wird, Verbindungsattributinformationen einer dem Ausgangsport entsprechenden Verbindung führt;
das Kennungspaket, das in der Nachfragenachricht, die durch die Einrichtung, die durch die zweite SDN-Substeuerung verwaltet wird, zur zweiten SDN-Substeuerung gesendet wird, eingekapselt ist, ferner Verbindungsattributinformationen einer dem Eingangsport entsprechenden Verbindung führt; und
das Bestimmen gemäß dem Kennungspaket, dass eine SDN-bereichsübergreifende Verbindung zwischen der designierten Einrichtung und der Einrichtung, die durch die zweite SDN-Substeuerung verwaltet wird, besteht, spezifisch Folgendes umfasst:
Bestimmen gemäß den Verbindungsattributinformationen der dem Ausgangsport entsprechenden Verbindung und den Verbindungsattributinformationen der dem Eingangsport entsprechenden Verbindung, die im Kennungspaket geführt werden, dass eine SDN-bereichsübergreifende Verbindung zwischen dem Ausgangsport und dem Eingangsport besteht.

9. Verfahren nach Anspruch 7 oder 8, wobei das Verfahren, vor dem Senden, durch eine SDN-Parent-Steuerung, einer Anzeigenachricht zu einer ersten SDN-Substeuerung, ferner Folgendes umfasst:
Empfangen, durch die SDN-Parent-Steuerung, von Portinformationen, die durch die erste SDN-Substeuerung gemeldet werden, wobei ein Port, der durch die Portinformationen repräsentiert wird, ein Port ist, der aus Ports von Einrichtungen, die durch die erste SDN-Substeuerung verwaltet werden und keine Verbindung mit irgendeinem der Ports bildet, bestimmt wird; und
Bestimmen, dass ein gemeldeter Port der designierte Ausgangsport gemäß den empfangenen Portinformationen ist, und Bestimmen, dass eine Einrichtung, zu der der gemeldete Port gehört, die designierte Einrichtung ist.

10. Softwaredefinierte Vernetzungssteuerung bzw. SDN-Steuerung, umfassend:
ein Empfangsmodul (3501), das dazu konfiguriert ist, eine Nachfragenachricht, die durch eine erste durch die SDN-Steuerung verwaltete Einrichtung gesendet wird, zu empfangen, wobei die Nachfragenachricht zum Abfragen nach Portinformationen eines Ports, der ein durch die erste Einrichtung empfangenes Kennungspaket weiterleitet, verwendet wird und das Kennungspaket, das eine Kennung einer anderen SDN-Steuerung führt, in der Kennungsnachricht eingekapselt ist;
ein Analysemodul (3502), das dazu konfiguriert ist, das Kennungspaket, das durch das Empfangsmodul (3501) empfangen wird und in der Nachfragenachricht eingekapselt ist, zu analysieren; und
ein Sendemödul (3503), das dazu konfiguriert ist, wenn gemäß einem Analyseergebnis des Analysemoduls (3502) bestimmt wird, dass das Kennungspaket keine Kennung der SDN-Steuerung führt, eine Einkapselungsnachricht, die gemäß der Nachfragenachricht bestimmt wird und in der das Kennungspaket eingekapselt ist, zu einer Verbindung in Kommunikation mit der SDN-Steuerung zu senden, wobei die Einkapselungsnachricht dazu verwendet wird, wenn die andere SDN-Steuerung die Einkapselungsnachricht empfängt, gemäß dem Kennungspaket, das in der Einkapselungsnachricht eingekapselt ist, zu bestimmen, dass eine SDN-bereichsübergreifende Verbindung zwischen einer zweiten Einrichtung, die das Kennungspaket zur ersten Einrichtung sendet, und der ersten Einrichtung besteht.

11. SDN-Steuerung nach Anspruch 10, wobei, wenn die andere SDN-Steuerung eine SDN-Parent-Steuerung der SDN-Steuerung ist, das Sendemodul (3503) spezifisch dazu konfiguriert ist, die Nachfragenachricht an die SDN-Parent-Steuerung der SDN-Steuerung weiterzuleiten.

12. SDN-Steuerung nach Anspruch 10, wobei
das Sendemodul (3503) spezifisch dazu konfiguriert ist, wenn das Kennungspaket eine Bereichskennung eines SDN-Bereichs, der durch die andere SDN-Steuerung verwaltet wird, führt, die Nachfragenachricht an die andere SDN-Steuerung gemäß der Bereichskennung des durch die andere SDN-Steuerung verwalteten SDN-Bereichs, die im Kennungspaket geführt und durch Analysieren erhalten wird, weiterzuleiten.

13. SDN-Steuerung nach Anspruch 10, wobei das Sendemodul (3503) spezifisch dazu konfiguriert ist, eine Anzeigenachricht, in der die Einkapselungsnachricht eingekapselt ist, zur ersten Einrichtung zu senden, wobei die Anzeigenachricht zum Anweisen der Einrichtung, die Einkapselungsnachricht weiterzuleiten, verwendet wird.

14. Softwaredefinierte Parent-Vernetzungssteuerung bzw. SDN-Parent-Steuerung, umfassend:
ein Sendemodul (3601), das dazu konfiguriert ist, eine Anzeigenachricht, in der ein Kennungspaket, das eine Kennung der SDN-Parent-Steuerung führt, eingekapselt ist, zu einer ersten SDN-Substeuerung zu senden, wobei die Anzeigenachricht zum Anweisen der ersten SDN-Substeuerung, das Kennungspaket unter Verwendung einer durch die erste SDN-Substeuerung verwalteten designierten Einrichtung weiterzuleiten, verwendet wird;
ein Empfangsmodul (3602), das dazu konfiguriert ist, eine Nachfragenachricht, die durch eine zweite SDN-Substeuerung weitergeleitet wird, zu empfangen, wobei die Nachfragenachricht eine Nachfragenachricht ist, die zum Abfragen der zweiten SDN-Substeuerung nach Portinformationen eines Ports, der das Kennungspaket weiterleitet, verwendet wird und in der das Kennungspaket durch eine Einrichtung, die durch die zweite SDN-Substeuerung verwaltet wird, eingekapselt wird, nachdem die Einrichtung das Kennungspaket, das durch die designierte Einrichtung gesendet wird, empfängt;
ein Analysemodul (3603), das dazu konfiguriert ist, das Kennungspaket, das durch das Empfangsmodul (3602) empfangen wird und in der Nachfragenachricht eingekapselt ist, zu analysieren; und
ein Bestimmungsmodul (3604), das dazu konfiguriert ist, wenn gemäß einem Analyseergebnis des Analysemoduls (3603) bestimmt wird, dass das Kennungspaket eine Kennung der SDN-Parent-Steuerung führt, gemäß dem Kennungspaket zu bestimmen, dass eine SDN-bereichsübergreifende Verbindung zwischen der designierten Einrichtung, die die Anzeigenachricht, die durch das Sendemodul (3601) gesendet wird, empfängt, und der Einrichtung, die durch die zweite SDN-Substeuerung verwaltet wird, besteht.

15. SDN-Parent-Steuerung nach Anspruch 14, wobei die Anzeigenachricht, die durch das Sendemodul (3601) gesendet wird, spezifisch zum Anweisen der designierten Einrichtung, das Kennungspaket unter Verwendung eines designierten Ausgangsports zu senden, verwendet wird und das Kennungspaket eine Korrespondenz mit der Anzeigenachricht aufweist;
die Nachfragenachricht, die durch das Empfangsmodul (3602) empfangen wird, spezifisch eine Nachfragenachricht ist, die Portinformationen eines Eingangsports führt und in der das Kennungspaket durch die Einrichtung, die durch die zweite SDN-Substeuerung verwaltet wird, eingekapselt wird, nachdem die Einrichtung, die durch die zweite SDN-Substeuerung verwaltet wird, das Kennungspaket, das durch die designierte Einrichtung unter Verwendung des Ausgangsports gesendet wird, unter Verwendung des Eingangsports empfängt, und die zum Abfragen der zweiten SDN-Substeuerung nach den Portinformationen des Ports, der das Kennungspaket weiterleitet, verwendet wird; und
das Bestimmungsmodul (3604) spezifisch dazu konfiguriert ist, eine Anzeigenachricht, die eine Korrespondenz mit dem Kennungspaket aufweist, gemäß dem Kennungspaket zu bestimmen; und zu bestimmen, dass eine SDN-bereichsübergreifende Verbindung zwischen dem Ausgangsport, der in der Anzeigenachricht designiert wird, und dem Eingangsport, der in der Nachfragenachricht angegeben wird, besteht.

## Revendications

1. Procédé, comprenant :
la réception (S201), par un premier contrôleur de fonctionnement en réseau défini par logiciel, SDN, d'un message d'interrogation envoyé par un premier dispositif administré par le premier contrôleur SDN, dans lequel le message d'interrogation est utilisé pour interroger au sujet d'informations de port d'un port qui achemine un paquet d'identifiant reçu par le premier dispositif, et le paquet d'identifiant comportant un identifiant d'un second contrôleur SDN est encapsulé dans le message d'interrogation ;
l'analyse syntaxique (S202), par le premier contrôleur SDN, du paquet d'identifiant ; et
quand il est déterminé que le paquet d'identifiant ne comporte pas d'identifiant du premier contrôleur SDN, l'envoi (S203), par le premier contrôleur SDN, à une liaison en communication avec le premier contrôleur SDN, d'un message d'encapsulation qui est déterminé conformément au message d'interrogation et dans lequel le paquet d'identifiant est encapsulé, dans lequel
le message d'encapsulation est utilisé pour : quand le second contrôleur SDN reçoit le message d'encapsulation, déterminer, par le second contrôleur SDN, conformément au paquet d'identifiant encapsulé dans le message d'encapsulation qu'une inter-liaison de domaine SDN existe entre un second dispositif qui envoie le paquet d'identifiant au premier dispositif et le premier dispositif.

2. Procédé selon la revendication 1, dans lequel, quand le second contrôleur SDN est un contrôleur SDN parent du premier contrôleur SDN, l'envoi, à une liaison en communication avec le premier contrôleur SDN, d'un message d'encapsulation qui est déterminé conformément au message d'interrogation et dans lequel le paquet d'identifiant est encapsulé comprend spécifiquement :
l'acheminement du message d'interrogation au contrôleur SDN parent du premier contrôleur SDN.

3. Procédé selon la revendication 1, dans lequel le paquet d'identifiant comporte un identifiant de domaine d'un domaine SDN administré par le second contrôleur SDN ; l'envoi, à une liaison en communication avec le premier contrôleur SDN, d'un message d'encapsulation qui est déterminé conformément au message d'interrogation et dans lequel le paquet d'identifiant est encapsulé comprend spécifiquement :
l'acheminement du message d'interrogation au second contrôleur SDN conformément à l'identifiant de domaine du domaine SDN administré par le second contrôleur SDN qui est inclus dans le paquet d'identifiant et obtenu par analyse syntaxique.

4. Procédé selon la revendication 2 ou 3, dans lequel le paquet d'identifiant encapsulé dans le message d'interrogation est reçu par le premier dispositif en utilisant un port d'entrée, et le message d'interrogation inclut en outre des informations de port du port d'entrée.

5. Procédé selon la revendication 2 ou 3, dans lequel le paquet d'identifiant encapsulé dans le message d'interrogation est le paquet d'identifiant qui est reçu par le premier dispositif en utilisant un port d'entrée et inclut des informations d'attribut de liaison d'une liaison correspondant à un port de sortie du second dispositif ; et
le paquet d'identifiant encapsulé dans le message d'interrogation envoyé par le premier dispositif au premier contrôleur SDN inclut en outre des informations d'attributs de liaison d'une liaison correspondant au port d'entrée.

6. Procédé, comprenant :
l'envoi (S301), par un contrôleur de fonctionnement en réseau défini par logiciel, SDN, parent, à un premier sous-contrôleur SDN, d'un message d'indication dans lequel un paquet d'identifiant comportant un identifiant du contrôleur SDN parent est encapsulé, dans lequel le message d'indication est utilisé pour ordonner au premier sous-contrôleur SDN d'acheminer le paquet d'identifiant en utilisant un dispositif désigné administré par le premier sous-contrôleur SDN ;
la réception (S302), par le contrôleur SDN parent, d'un message d'interrogation acheminé par un second sous-contrôleur SDN, dans lequel le message d'interrogation est un message d'interrogation utilisé pour interroger le second sous-contrôleur SDN au sujet des informations de port d'un port qui achemine le paquet d'identifiant et dans lequel le paquet d'identifiant est encapsulé par un dispositif administré par le second sous-contrôleur SDN après que le dispositif reçoit le paquet d'identifiant envoyé par le dispositif désigné ;
l'analyse syntaxique (S303), par le contrôleur SDN parent, du paquet d'identifiant encapsulé dans le message d'interrogation ; et
quand il est déterminé que le paquet d'identifiant inclut un identifiant du contrôleur SDN parent, la détermination (S304), par le contrôleur SDN parent, conformément au paquet d'identifiant qu'une inter-liaison de domaine SDN existe entre le dispositif désigné et le dispositif qui est administré par le second sous-contrôleur SDN.

7. Procédé selon la revendication 6, dans lequel le message d'indication est utilisé spécifiquement pour ordonner au dispositif désigné d'envoyer le paquet d'identifiant en utilisant un port de sortie désigné, et le paquet d'identifiant a une correspondance avec le message d'indication ;
le message d'interrogation est spécifiquement un message d'interrogation qui inclut des informations de port d'un port d'entrée, dans lequel le paquet d'identifiant est encapsulé par le dispositif administré par le second sous-contrôleur SDN après que le dispositif administré par le second sous-contrôleur SDN reçoit, au moyen du port d'entrée, le paquet d'identifiant envoyé par le dispositif désigné au moyen du port de sortie, et qui est utilisé pour interroger le second sous-contrôleur SDN au sujet des informations de port du port qui achemine le paquet d'identifiant ; et
la détermination conformément au paquet d'identifiant qu'une inter-liaison de domaine SDN existe entre le dispositif désigné et le dispositif qui est administré par le second sous-contrôleur SDN comprend spécifiquement :
la détermination d'un message d'indication qui a une correspondance avec le paquet d'identifiant conformément au paquet d'identifiant ; et
la détermination qu'une inter-liaison de domaine SDN existe entre le port de sortie désigné dans le message d'indication et le port d'entrée inclus dans le message d'interrogation.

8. Procédé selon la revendication 6, dans lequel le message d'indication est utilisé spécifiquement pour ordonner au dispositif désigné d'envoyer le paquet d'identifiant en utilisant un port de sortie désigné ; et le paquet d'identifiant envoyé par le dispositif désigné en utilisant le port de sortie inclut des informations d'attributs de liaison d'une liaison correspondant au port de sortie ;
le paquet d'identifiant encapsulé dans le message d'interrogation envoyé par le dispositif administré par le second sous-contrôleur SDN au second sous-contrôleur SDN inclut en outre des informations d'attributs de liaison d'une liaison correspondant au port d'entrée ; et
la détermination conformément au paquet d'identifiant qu'une inter-liaison de domaine SDN existe entre le dispositif désigné et le dispositif qui est administré par le second sous-contrôleur SDN comprend spécifiquement :
la détermination conformément aux informations d'attributs de liaison de la liaison correspondant au port de sortie et aux informations d'attributs de liaison de la liaison correspondant au port d'entrée qui sont incluses dans le paquet d'identifiant qu'une inter-liaison de domaine SDN existe entre le port de sortie et le port d'entrée.

9. Procédé selon la revendication 7 ou 8, comprenant en outre, avant l'envoi, par un contrôleur SDN parent, d'un message d'indication à un premier sous-contrôleur SDN
la réception, par le contrôleur SDN parent, d'informations de port communiquées par le premier sous-contrôleur SDN, dans lequel un port représenté par les informations de port est un port qui est déterminé parmi les ports de dispositifs administrés par le premier sous-contrôleur SDN et qui ne forme aucune liaison avec l'un quelconque des ports ; et
la détermination qu'un port communiqué est le port de sortie désigné, conformément aux informations de port reçues, et la détermination qu'un dispositif auquel appartient le port communiqué est le dispositif désigné.

10. Contrôleur de fonctionnement en réseau défini par logiciel, SDN, comprenant :
un module de réception (3501), configuré pour recevoir un message d'interrogation envoyé par un premier dispositif administré par le contrôleur SDN, dans lequel le message d'interrogation est utilisé pour interroger au sujet d'informations de port d'un port qui achemine un paquet d'identifiant reçu par le premier dispositif, et le paquet d'identifiant comportant un identifiant d'un autre contrôleur SDN est encapsulé dans le message d'interrogation ;
un module d'analyse syntaxique (3502), configuré pour analyser syntaxiquement le paquet d'identifiant qui est reçu par le module de réception (3501) et encapsulé dans le message d'interrogation ; et
un module d'envoi (3503), configuré pour : quand il est déterminé conformément à un résultat d'analyse syntaxique du module d'analyse syntaxique (3502) que le paquet d'identifiant ne comporte pas d'identifiant du contrôleur SDN, envoyer, à une liaison en communication avec le contrôleur SDN, un message d'encapsulation qui est déterminé conformément au message d'interrogation et dans lequel le paquet d'identifiant est encapsulé, dans lequel le message d'encapsulation est utilisé pour : quand l'autre contrôleur SDN reçoit le message d'encapsulation, déterminer, conformément au paquet d'identifiant encapsulé dans le message d'encapsulation qu'une inter-liaison de domaine SDN existe entre un second dispositif qui envoie le paquet d'identifiant au premier dispositif et le premier dispositif.

11. Contrôleur SDN selon la revendication 10, dans lequel, quand l'autre contrôleur SDN est un contrôleur SDN parent du contrôleur SDN, le module d'envoi (3503) est configuré spécifiquement pour acheminer le message d'interrogation au contrôleur SDN parent du contrôleur SDN.

12. Contrôleur SDN selon la revendication 10, dans lequel
le module d'envoi (3503) est configuré spécifiquement pour : quand le paquet d'identifiant comporte un identifiant de domaine d'un domaine SDN administré par l'autre contrôleur SDN, acheminer le message d'interrogation à l'autre contrôleur SDN conformément à l'identifiant de domaine du domaine SDN administré par l'autre contrôleur SDN qui est inclus dans le paquet d'identifiant et obtenu par analyse syntaxique.

13. Contrôleur SDN selon la revendication 10, dans lequel le module d'envoi (3503) est configuré spécifiquement pour envoyer au premier dispositif un message d'indication dans lequel le message d'encapsulation est encapsulé, dans lequel le message d'indication est utilisé pour ordonner au dispositif d'acheminer le message d'encapsulation.

14. Contrôleur de fonctionnement en réseau défini par logiciel, SDN, parent, comprenant
un module d'envoi (3601), configuré pour envoyer à un premier sous-contrôleur SDN un message d'indication dans lequel un paquet d'identifiant comportant un identifiant du contrôleur SDN parent est encapsulé, dans lequel le message d'indication est utilisé pour ordonner au premier sous-contrôleur SDN d'acheminer le paquet d'identifiant en utilisant un dispositif désigné administré par le premier sous-contrôleur SDN ;
un module de réception (3602), configuré pour recevoir un message d'interrogation acheminé par un second sous-contrôleur SDN, dans lequel le message d'interrogation est un message d'interrogation utilisé pour interroger le second sous-contrôleur SDN au sujet d'informations de port d'un port qui achemine le paquet d'identifiant et dans lequel le paquet d'identifiant est encapsulé par un dispositif administré par le second sous-contrôleur SDN après que le dispositif reçoit le paquet d'identifiant envoyé par le dispositif désigné ;
un module d'analyse syntaxique (3603), configuré pour analyser syntaxiquement le paquet d'identifiant reçu par le module de réception (3602) et encapsulé dans le message d'interrogation ; et
un module de détermination (3604), configuré pour : quand il est déterminé conformément à un résultat d'analyse syntaxique du module d'analyse syntaxique (3603) que le paquet d'identifiant inclut un identifiant du contrôleur SDN parent, déterminer conformément au paquet d'identifiant qu'une inter-liaison de domaine SDN existe entre le dispositif désigné qui reçoit le message d'indication envoyé par le module d'envoi (3601) et le dispositif qui est administré par le second sous-contrôleur SDN.

15. Contrôleur SDN parent selon la revendication 14, dans lequel le message d'indication envoyé par le module d'envoi (3601) est utilisé spécifiquement pour ordonner au dispositif désigné d'envoyer le paquet d'identifiant en utilisant un port de sortie désigné, et le paquet d'identifiant a une correspondance avec le message d'indication ; le message d'interrogation reçu par le module de réception (3602) est spécifiquement un message d'interrogation qui inclut des informations de port d'un port d'entrée, dans lequel le paquet d'identifiant est encapsulé par le dispositif administré par le second sous-contrôleur SDN après que le dispositif administré par le second sous-contrôleur SDN reçoit, au moyen du port d'entrée, le paquet d'identifiant envoyé par le dispositif désigné au moyen du port de sortie, et qui est utilisé pour interroger le second sous-contrôleur SDN au sujet des informations de port du port qui achemine le paquet d'identifiant ; et
le module de détermination (3604) est configuré spécifiquement pour déterminer un message d'indication qui a une correspondance avec le paquet d'identifiant conformément au paquet d'identifiant ; et déterminer qu'une inter-liaison de domaine SDN existe entre le port de sortie désigné dans le message d'indication et le port d'entrée indiqué dans le message d'interrogation.
